(19) Europäisches Patentamt

European Patent Office

Office européen des brevets

(11) **EP 1 617 585 A1**

(12) **EUROPEAN PATENT APPLICATION**
published in accordance with Art. 158(3) EPC

(43) Date of publication:
**18.01.2006 Bulletin 2006/03**

(51) Int Cl.:
*H04L 9/08* (1990.01)     *H04L 12/44* (1990.01)

(21) Application number: **04728018.5**

(22) Date of filing: **16.04.2004**

(86) International application number:
**PCT/JP2004/005458**

(87) International publication number:
**WO 2004/093380 (28.10.2004 Gazette 2004/44)**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **18.04.2003 JP 2003114879**

(71) Applicant: **SONY CORPORATION**
**Tokyo 141-0001 (JP)**

(72) Inventors:
• **MIHALJEVIC, Miodrag J.**
**c/o Sony Corporation**
**Tokyo 1410001 (JP)**
• **ABE, Jouji**
**c/o Sony Corporation**
**Tokyo 1410001 (JP)**

(74) Representative: **Müller, Frithjof E.**
**Müller Hoffmann & Partner**
**Patentanwälte**
**Innere Wiener Strasse 17**
**81667 München (DE)**

(54) **DATA PROCESSING METHOD**

(57) Key encryption key data KEK used for communication between a key management device 3 and receiving apparatuses 4_1 to 4_N is acquired based on a tree divided into two horizontal layers A0 and A1. In this case, the LSD method is employed as a revocation method of each section 31[0] belonging to the horizontal layer A0. Further, the CST method is employed as the revocation method of each section 31[1] belonging to the horizontal layer A1.

FIG. 5

**Description**

TECHNICAL FIELD

The present invention relates to a data processing method for secure communication, a program of the same, an apparatus of the same, and a receiving apparatus.

BACKGROUND ART

In secure communication, ordinarily a key management device and a receiving apparatus (terminal equipment) hold or generate the same session key data, and the key management device encrypts the data based on the session key data (hereinafter also referred to as "SEK data") and transmits it to the receiving apparatus.

In such secure communication, the secure communication is carried out based on for example common session key data for a plurality of receiving apparatuses determined in advance.

In this case, when one or more of the plurality of receiving apparatuses loses its rights, the key management device must update the session key data which had been used hitherto to revoke (invalidate) the rights of that receiving apparatus.

As methods of updating such session key data (key acquisition method), that is, revocation processing, for example, the LSD method disclosed in "D. Halevy and A. Shamir, "The LCD broadcast encryption scheme", CRYPTO 2002, Lecture Notes in Computer Science, vol. 2442. pp. 47-60, 2002" and the CST method disclosed in "D. Naor, M. Naor, and J. Lotspiech, "Revocation and tracing schemes for stateless receivers", CRYPTO 2001, Lecture Notes in Computer Science, vol. 2139, pp. 41-62, 2001" have been known.

In the key acquisition methods disclosed in these, the revocation processing is carried out based on a tree comprised of the key management device allocated to the root and the plurality of receiving apparatuses allocated to the plurality of leaves.

In this case, the key management device makes the receiving apparatuses hold a plurality of key data defined based on the tree in advance and instructs the receiving apparatuses not to be revoked which of the plurality of key data is used by the key management device for generating the key encryption key data used for the secure communication.

Then, each receiving apparatus not to be revoked selects the instructed key data from among the plurality of key data held in advance and generates the key encryption key data by the key acquisition method determined in advance in a fixed manner by using the selected key data.

The key management device encrypts the new session key data by the key encryption key data and transmits this to the receiving apparatuses not to be revoked.

Each receiving apparatus not to be revoked decodes the encrypted session key data received from the key management device by using the generated key encryption key data to obtain new session key data.

Here, the amount of communication between the key management side and the receiving apparatuses accompanied with the revocation processing is smaller in the LSD method than that in the CST method, but the number of key data (amount of data) held by the receiving apparatus is smaller in the CST than that in the LSD method.

There is therefore a trade off between the amount of communication between the key management side and the receiving apparatuses accompanied with the revocation processing and the amount of the key data held by each receiving apparatus.

Conventionally, the revocation processing has been carried out by applying only one of the LSD method and CST method to the entire tree used for the key management.

With the conventional technique applying only one of the LSD method and the CST method to the entire tree used for the key management, however, there is the problem that the trade off between the amount of communication between the key management side and the receiving apparatuses accompanied with the revocation processing and the amount of the key data held by each receiving apparatus is not suitable.

Namely, there is the problem that when the LSD method is employed, the amount of the key data held by each receiving apparatus becomes enormous, while when the CST method is employed, the amount of communication accompanied with the revocation processing becomes enormous, and it is difficult to construct a system which can be realized. Such a problem becomes more serious as the number of receiving apparatuses becomes larger.

DISCLOSURE OF THE INVENTION

The present invention was made in consideration with the above background and has as an object thereof to provide a data processing method defining a suitable trade off between the amount of communication between the key management side and the receiving apparatuses accompanied with the revocation processing and the amount of data held by the receiving apparatus, a program of same, an apparatus of same, and a receiving apparatus.

To attain the above object, the data processing method of the first aspect of the invention is a data processing method performed by a key management side based on a tree defining a first layer to which a plurality of leaves linked with a plurality of receiving apparatuses belong and a second layer to which a root linked with the key management side belongs, comprising a first step of specifying sets having as elements only receiving apparatuses not to be invalidated in the sub trees from among a plurality of sets defined in advance for sub trees including receiving apparatuses to be invalidated among sub trees belonging to the first layer; a second step of specifying nodes not having any receiving apparatuses to be invalidated at branches of the nodes among nodes at terminal ends in the second layer; a third step of specifying the nodes not having any receiving apparatuses to be invalidated at the leaves branched from the node and nearest the root from among nodes located on the paths between the nodes specified at the second step and the root; and a fourth step of communicating with receiving apparatuses not to be invalidated based on the second key data allocated to the nodes specified at the third step.

The mode of operation of the data processing method of the first aspect of the invention is as follows.

First, the first step specifies sets having as elements only receiving apparatuses not to be invalidated in the sub trees from among a plurality of sets defined in advance for sub trees including receiving apparatuses to be invalidated among the sub trees belonging to the first layer.

Next, the second step specifies nodes not having any receiving apparatuses to be invalidated at the branches of the nodes from among the nodes at the terminal ends in the second layer.

Next, the third step specifies the nodes not having receiving apparatuses to be invalidated at the leaves branched from the nodes and nearest the root from among nodes located on the paths between the nodes specified at the second step and the root.

Next, the fourth step communicates with the receiving apparatuses not to be invalidated based on the first key data allocated to the sets specified at the first step and the second key data allocated to the nodes specified at the third step.

The program of the second aspect of the invention is a program for making a computer on the key management side execute key management processing based on a tree defining a first layer to which a plurality of leaves linked with a plurality of receiving apparatuses belong and a second layer to which a root linked with the key management side belongs, comprising a first routine of specifying sets having as elements only receiving apparatuses not to be invalidated in the sub trees from among a plurality of sets defined in advance for sub trees including receiving apparatuses to be invalidated among sub trees belonging to the first layer; a second routine of specifying nodes not having any receiving apparatuses to be invalidated at branches of the nodes among nodes at terminal ends in the second layer; a third routine of specifying the nodes not having any receiving apparatuses to be invalidated at the leaves branched from the node and nearest the root from among nodes located on the paths between the nodes specified at the second routine and the root; and a fourth routine of communicating with receiving apparatuses not to be invalidated based on the second key data allocated to the nodes specified at the third routine.

The data processing apparatus of the third aspect of the invention is a data processing apparatus for key management based on a tree defining a first layer to which a plurality of leaves linked with a plurality of receiving apparatuses belong and a second layer to which a root linked with the key management side belongs, comprising a first means for specifying sets having as elements only receiving apparatuses not to be invalidated in the sub trees from among a plurality of sets defined in advance for sub trees including receiving apparatuses to be invalidated among sub trees belonging to the first layer; a second means for specifying nodes not having any receiving apparatuses to be invalidated at branches of the nodes among nodes at terminal ends in the second layer; a third means for specifying the nodes not having any receiving apparatuses to be invalidated at the leaves branched from the node and nearest the root from among nodes located on the paths between the nodes specified by the second means and the root; and a fourth means for communicating with receiving apparatuses not to be invalidated based on the second key data allocated to the nodes specified by the third means.

First, the first means specifies sets having as elements only receiving apparatuses not to be invalidated in the sub trees from among a plurality of sets defined in advance for sub trees including receiving apparatuses to be invalidated among the sub trees belonging to the first layer.

Next, the second means specifies nodes not having any receiving apparatuses to be invalidated at the branches of the nodes from among the nodes at the terminal ends in the second layer.

Next, the third means specifies the nodes not having receiving apparatuses to be invalidated at the leaves branched from the nodes and nearest the root from among nodes located on the paths between the nodes specified by the second means and the root.

Next, the fourth means communicates with the receiving apparatuses not to be invalidated based on the first key data allocated to the sets specified at the first step and the second key data allocated to the nodes specified by the third means.

A receiving apparatus of a fourth aspect of the invention is a receiving apparatus for communicating with a key management side based on a tree defining a first layer to which a plurality of leaves linked with a plurality of receiving apparatuses belong and a second layer to which a root linked with the key management side belongs, comprising a storing means for storing third key data for generating a plurality of first key data allocated to a plurality of sets defined so that there are sets having as elements only receiving apparatuses not to be invalidated in the sub trees even in a case where any other receiving apparatuses in sub trees to which the receiving apparatuses in the first layer belong are invalidated and plurality of second key data allocated to all of the nodes located on the paths between the nodes on the terminal ends corresponding to those receiving apparatuses in the second layer and the root and a processing means for generating the first key data based on the third key data read out from the storing means when the key designation data received from the key management side designates the third key data, communicating with the key management side by using the first key data, and communicating with the key management side by using the second key data read from the storing means when the key designation data designates the second key data.

A data processing method of a fifth aspect of the invention is a data processing method performed by a key management side based on a tree defining a first layer to which a plurality of leaves linked with a plurality of receiving apparatuses belong and a second layer to which a root linked with the key management side belongs, comprising a first step of specifying sets having as elements only receiving apparatuses not to be invalidated in the sub trees from among a plurality of sets defined in advance for sub trees including receiving apparatuses to be invalidated among sub trees belonging to the first layer; a second step of specifying sets having as elements only nodes including only receiving apparatuses not to be invalidated at the branches among nodes on the terminal ends in the sub trees from among a plurality of sets defined in advance for the sub trees including receiving apparatuses to be invalidated at the branches among the sub trees belonging to the third layer; a third step of specifying the nodes not having any receiving apparatuses to be invalidated at the branches from the nodes and nearest the root from among nodes located on the paths between the nodes not having receiving apparatuses to be invalidated at the branches of the nodes and the root among the nodes of the second layer; and a fourth step of communicating with the receiving apparatuses not to be invalidated based on the first key data allocated to the sets specified at the first step, the second key data allocated to the sets specified at the second step, and the third key data allocated to the nodes specified at the third step.

The mode of operation of the data processing method of the fifth aspect of the invention is as follows.

First, the first step specifies sets having as elements only receiving apparatuses not to be invalidated in sub trees from among a plurality of sets defined in advance for sub trees including receiving apparatuses to be invalidated among sub trees belonging to a first layer.

Next, the second step specifies sets having as elements only nodes including only receiving apparatuses not to be invalidated at the branches among nodes at the terminal ends in the sub trees from among a plurality of sets defined in advance for sub trees including receiving apparatuses to be invalidated at the branches among sub trees belonging to a third layer.

Next, the third step specifies nodes not having any receiving apparatuses to be invalidated at the branches from the nodes and nearest the root from among the nodes located on the paths between the nodes not having any receiving apparatuses to be invalidated at the branches of the nodes and the root among the nodes of the second layer.

Next, the fourth step communicates with the receiving apparatuses not to be invalidated based on the first key data allocated to the sets specified at the first step, the second key data allocated to the sets specified at the second step, and the third key data allocated to the nodes specified at the third step.

The program of the sixth aspect of the invention is a program for making a computer on the key management side execute key management processing based on a tree defining a first layer to which a plurality of leaves linked with a plurality of receiving apparatuses belong, a second layer to which a root linked with the key management side belongs, and a third layer interposed between the first layer and the second layer, comprising a first routine of specifying sets having as elements only receiving apparatuses not to be invalidated in the sub trees from among a plurality of sets defined in advance for sub trees including receiving apparatuses to be invalidated among sub trees belonging to the first layer; a second routine of specifying sets having as elements only nodes including only receiving apparatuses not to be invalidated at the branches among nodes on the terminal ends in the sub trees from among a plurality of sets defined in advance for the sub trees including receiving apparatuses to be invalidated at the branches among the sub trees belonging to the third layer; a third routine of specifying the nodes not having any receiving apparatuses to be invalidated at the branches from the nodes and nearest the root from among nodes located on the paths between the nodes not having receiving apparatuses to be invalidated at the branches of the nodes and the root among the nodes of the second layer; and a fourth routine of communicating with the receiving apparatuses not to be invalidated based on the first key data allocated to the sets specified at the first routine, the second key data allocated to the sets specified at the second routine, and the third key data allocated to the nodes specified at the third routine.

A data processing apparatus of the seventh aspect of the invention is a data processing apparatus for key management based on a tree defining a first layer to which a plurality of leaves linked with a plurality of receiving apparatuses belong, a second layer to which a root linked with the key management side belongs, and a third layer interposed between the first layer and the second layer, comprising a first means for specifying sets having as elements only receiving apparatuses not to be invalidated in the sub trees from among a plurality of sets defined in advance for sub trees including receiving apparatuses to be invalidated among sub trees belonging to the first layer; a second means for specifying sets having as elements only nodes including only receiving apparatuses not to be invalidated at the branches among nodes on the terminal ends in the sub trees from among a plurality of sets defined in advance for the sub trees including receiving apparatuses to be invalidated at the branches among the sub trees belonging to the third layer; a third means for specifying the nodes not having any receiving apparatuses to be invalidated at the branches from the nodes and nearest the root from among nodes located on the paths between the nodes not having receiving apparatuses to be invalidated at the branches of the nodes and the root among the nodes of the second layer; and a fourth routine of communicating with the receiving apparatuses not to be invalidated based on the first key data allocated to the sets specified by the first means, the second key data allocated to the sets specified by the second means, and the third key data allocated to the nodes specified by the third means.

The mode of operation of the data processing apparatus of the seventh aspect of the invention is as follows.

First, the first means specifies sets having as elements only receiving apparatuses not to be invalidated in sub trees from among a plurality of sets defined in advance for sub trees including receiving apparatuses to be invalidated among sub trees belonging to a first layer.

Next, the second means specifies sets having as elements only nodes including only receiving apparatuses not to be invalidated at the branches among nodes at the terminal ends in the sub trees from among a plurality of sets defined in advance for sub trees including receiving apparatuses to be invalidated at the branches among sub trees belonging to a third layer.

Next, the third means specifies nodes not having any receiving apparatuses to be invalidated at the branches from the nodes and nearest the root from among the nodes located on the paths between the nodes not having any receiving apparatuses to be invalidated at the branches of the nodes and the root among the nodes of the second layer.

Next, the fourth means communicates with the receiving apparatuses not to be invalidated based on the first key data allocated to the sets specified by the first means, the second key data allocated to the sets specified by the second means, and the third key data allocated to the nodes specified by the third means.

A receiving apparatus of an eighth aspect of the invention is a receiving apparatus for communicating with a key management side based on a tree defining a first layer to which a plurality of leaves linked with a plurality of receiving apparatuses belong, a second layer to which a root linked with the key management side belongs, and a third layer interposed between the first layer and the second layer, comprising a storing means for storing second key data for generating a plurality of first key data allocated to a plurality of sets defined so that there are sets comprised of only receiving apparatuses not to be invalidated in the sub trees even in a case where any other receiving apparatuses in sub trees to which receiving apparatuses in the first layer belong are invalidated, fourth key data for generating a plurality of third key data allocated to a plurality of sets defined so that there are sets having as elements only nodes at the terminal ends not having receiving apparatuses to be invalidated at the branches thereof even in a case where other receiving apparatuses at the branches of any nodes among nodes at the terminal ends of the third layer are invalidated, and a plurality of fifth key data allocated to all of the nodes located on the paths between the nodes at the terminal ends corresponding to the receiving apparatuses at the second layer and the root and a processing means for generating the first key data based on the second key data read from the storing means when the key designation data received from the key management side designates the second key data, generating the third key data based on the fourth key data read from the storing means when the key designation data designates the fourth key data, communicating with the key management side by using the third key data, and communicating with the key management side by using the fifth key data read from the storing means when the key designation data designates the fifth key data.

BRIEF DESCRIPTION OF THE DRAWINGS

FIG. 1 is a view of the overall configuration of a communication system according to a first embodiment of the present invention.
FIG. 2 is a view of the hardware configuration of a key management device shown in FIG. 1.
FIG. 3 is a view for explaining a tree structure serving as the basis of a key acquisition method employed in the first embodiment of the present invention.
FIG. 4 is a flow chart for explaining processing of the key acquisition method employed in the first embodiment of the present invention.
FIG. 5 is a view for explaining a key acquisition method SKT-A employed in the first embodiment of the present invention.
FIG. 6 is a view for explaining a CST method.
FIG. 7 is a view for explaining the CST method.
FIG. 8 is a view for explaining the CST method.
FIG. 9 is a view for explaining an SD method.

FIG. 10A and 10B are views for explaining the SD method.

FIG. 11 is a view for explaining the SD method.

FIG. 12 is a view for explaining the SD method.

FIG. 13 is a view for explaining an LSD method.

FIG. 14 is a view for explaining the LSD method.

FIG. 15 is a flow chart for explaining pre-processing performed by the key management device shown in FIG. 1.

FIG. 16 is a flow chart for explaining revocation processing performed by the key management device shown in FIG. 1.

FIG. 17 is a view for explaining capsule data CAP transmitted to a receiving apparatus not to be revoked by the key management device shown in FIG. 1.

FIG. 18 is a flow chart for explaining step ST23 shown in FIG. 16.

FIG. 19 is a view of the hardware configuration of the receiving apparatuses shown in FIG. 1.

FIG. 20 is a flow chart for explaining an example of the operation of the receiving apparatus shown in FIG. 1.

FIG. 21 is a flow chart for explaining step ST44 shown in FIG. 20.

FIG. 22 is a view for explaining a key acquisition method SKT-B according to a second embodiment of the present invention.

FIG. 23 is a flow chart for explaining the pre-processing performed by the key management device of the second embodiment of the present invention.

FIG. 24 is a flow chart for explaining the processing of step ST23 of FIG. 16 performed by the key management device of the second embodiment of the present invention.

BEST MODE FOR WORKING THE INVENTION

Below, an explanation will be given of a communication system according to embodiments of the present invention.

First Embodiment:

The first embodiment is an embodiment of the first to fourth aspects of the invention.

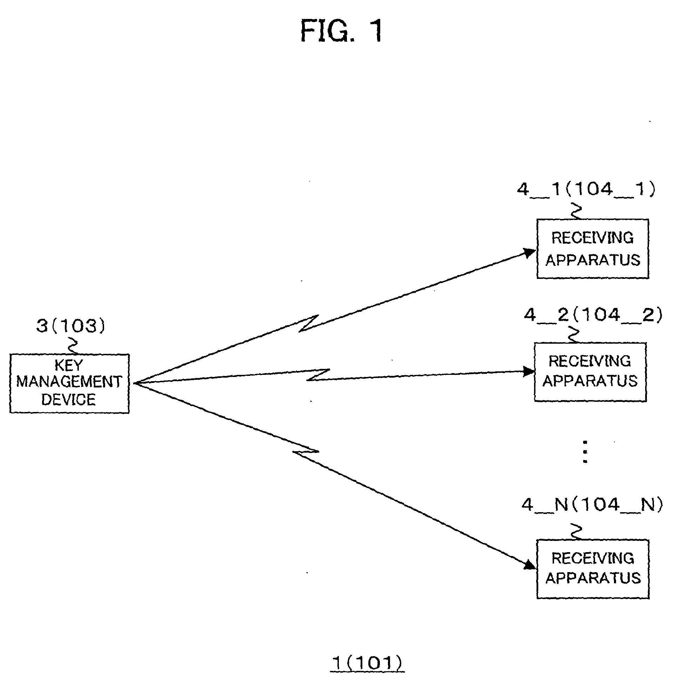

FIG. 1 is a view of the overall configuration of a communication system 1 according to the first embodiment of the present invention.

As shown in FIG. 1, the communication system 1 has for example a key management device 3 and a plurality of (N) receiving apparatuses 4_1 to 4_N.

Here, the key management device 3 corresponds to the key management side of the present invention and the data processing apparatus of the third aspect of the invention, and the receiving apparatuses 4_1 to 4_N correspond to the receiving apparatuses of the present invention.

The key management device 3 and the receiving apparatuses 4_1 to 4_N for example transfer data (communicate) by the wireless method.

The receiving apparatuses 4_1 to 4_N are registered in the key management device 3 in advance and hold key data K_ORG and label data LABEL used for secret communication (secure communication) with the key management device 3.

Below, a brief explanation will be given of the communication system 1.

The communication system 1 performs the key management based on a horizontal layer AO (the first layer of the present invention) to which a plurality of leaves allocated with the receiving apparatuses 4_1 to 4_N belong and a horizontal layer A1 (the second layer of the present invention) to which a root allocated with the key management device 3 belongs.

A plurality of sub trees are defined in the tree.

The key management device 3 specifies sets having as elements only receiving apparatuses not to be revoked in the sub trees from among a plurality of sets defined in advance for sub trees including receiving apparatuses to be revoked (invalidated) among sub trees belonging to the horizontal layer AO.

Then, the key management device 3 acquires key encryption key data KEK used for communication with the receiving apparatuses of the elements of the specified sets based on the label LABEL allocated to the specified sets.

Further, the key management device 3 specifies nodes not having any receiving apparatuses to be revoked at the branches of the nodes from among nodes at the terminal ends in the horizontal layer A1.

Then, the key management device 3 specifies nodes not having any receiving apparatuses to be revoked at the leaves branched from the nodes and nearest the root from among nodes located on the paths between the specified nodes and the root.

Then, the key management device 3 uses the key data allocated to the specified nodes as the key encryption key data KEK used for communication with the receiving apparatuses not to be revoked linked with the leaves branched from the specified nodes.

The key management device 3 transmits the key designation data for generating the key encryption key data KEK to the receiving apparatuses 4_1 to 4_N not to be revoked.

Then, the receiving apparatuses 4_1 to 4_N not to be revoked acquire the key encryption key data KEK based on the key designation data.

The key management device 3 encrypts new session key data NEW_SEK based on the key encryption key data KEK and transmits the same to the receiving apparatuses 4_1 to 4_N.

The receiving apparatuses 4_1 to 4_N not to be revoked decode the session key data NEW_SEK based on the acquired key encryption key data KEK.

Subsequently, secure communication between the key management device 3 and the receiving apparatuses 4_1 to 4_N not to be revoked is carried out based on the session key data NEW_SEK.

Below, an explanation will be given of the key management device 3 and the receiving apparatuses 4_1 to 4_N shown in FIG. 1.

[Key Management Device 3]

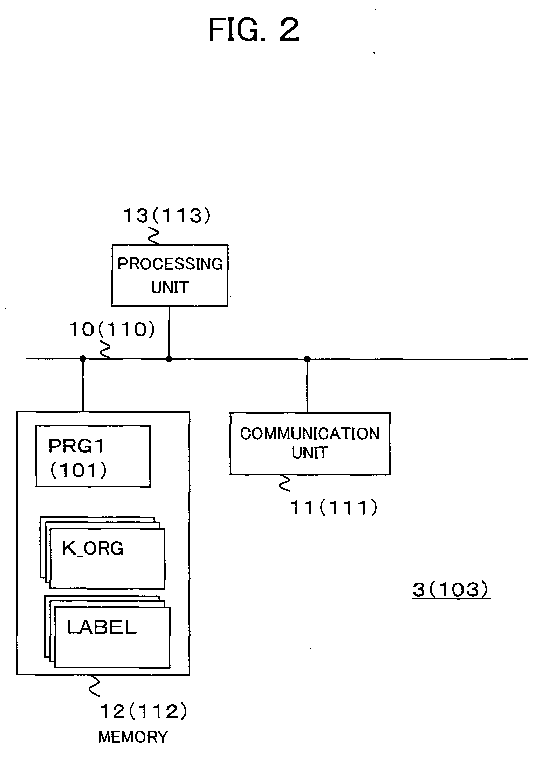

FIG. 2 is a view of the hardware configuration of the key management device 3 shown in FIG. 1.

As shown in FIG. 2, the key management device 3 has for example a communication unit 11, a memory 12, and a processing unit 13.

The communication unit 11 transmits the data generated by the processing unit 13 by the wireless method. The transmission is for SDR secure download by software defined radio (SDR) by a broadcast or other push method.

The memory 12 stores a program PRG1 executed by the processing unit 13 and various data used for the execution of the program PRG1.

Here, the program PRG1 corresponds to the program of the second aspect of the invention.

For example, the memory 12 stores for example all key data K_ORG and label data LABEL held by the receiving apparatuses 4_1 to 4_N.

Further, the memory 12 may store the key encryption key data KEK finally acquired by them without storing part or all of the key data K_ORG and label data LABEL as well.

The processing unit 13 executes the program PRG1 stored in the memory 12 and centrally controls the processing of the key management device 3 in accordance with the execution thereof. In the present embodiment, the processing of the key management device 3 is defined according to the program PRG1 executed by the processing unit 13.

The processing unit 13 performs the pre-processing such as distribution of the key data K_ORG and the label data LABEL to the receiving apparatuses 4_1 to 4_N and secure processing such as revocation processing such as update processing of the session key data in accordance with the execution of the program PRG1.

The processing unit 13 performs the pre-processing at the time of for example the registration of the receiving apparatuses 4_1 to 4_N preceding the revocation processing.

The processing unit 13 sets the key acquisition method (underlying structure) employed when performing the revocation processing and the key data K_ORG and the label data LABEL used in the key acquisition method in the receiving apparatuses 4_1 to 4_N in the pre-processing.

The processing unit 13 performs the revocation processing when any of the receiving apparatuses 4_1 to 4_N is to be revoked (invalidated).

The processing unit 13, in the revocation processing, selects the key encryption key data KEK for transmitting the session key data SEK to the receiving apparatuses 4_1 to 4_N not to be revoked in accordance with which of the receiving apparatuses 4_1 to 4_N is to be revoked in the revocation processing.

Then, the processing unit 13 transmits the key designation data for the receiving apparatuses 4_1 to 4_N not to be revoked to generate the key encryption key data KEK to the receiving apparatuses 4_1 to 4_N not to be revoked.

As the key acquisition method, in the present embodiment, as shown below, use is made of the SKT (sectioned key trees) individually defining the revocation method, defined based on the LSD method disclosed in Non-patent document 1, the CST method disclosed in Non-patent document 2, or another revocation method, for each section formed by a sub tree forming a tree comprised of a plurality of bisecting trees combined symmetrically left and right.

The information concerning the key acquisition method SKT employed by the processing unit 13 and the key data K_ORG and the label data LABEL used in the key acquisition method are provided to the receiving apparatuses 4_1 to 4_N by the pre-processing.

In the tree, a plurality of horizontal layers are defined, and each horizontal layer is divided into a plurality of sections.

Further, each section has a sub tree in which the root (node) thereof forms a leaf (node) of the higher horizontal layer.

Further, for example, sections belonging to the same horizontal layer have the same number of nodes. Namely, sections belonging to the same layer have the same sub trees.

As a general example, when a tree is divided into K number of horizontal layers, and the height of each horizontal layer $\ell$ ($\ell$ is an integer of from 0 to L-1) is H[$\ell$], the tree has 2H[$\ell$-1] number of leaves. Further, the horizontal layer $\ell$ has the number of sections indicated by the following formula (1), and a sub tree thereof has 2H[$\ell$-1] number of leaves.

$$\prod_{i=\ell+1}^{L-1} 2^{H_i} = 2^{\sum_{i=\ell+1}^{L-1} Hi} \dots (1)$$

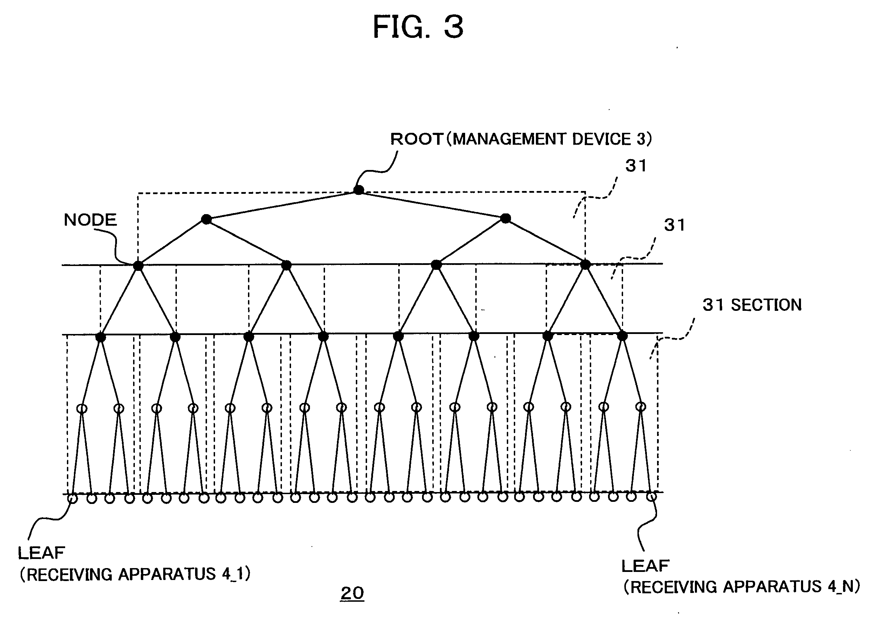

The structure of a tree 20 in a case where K=3, H[0]=2, H[1]=1, and H[3]=2 is shown in FIG. 3.

Below, an explanation will be given of the key acquisition method of the present embodiment defined based on the tree.

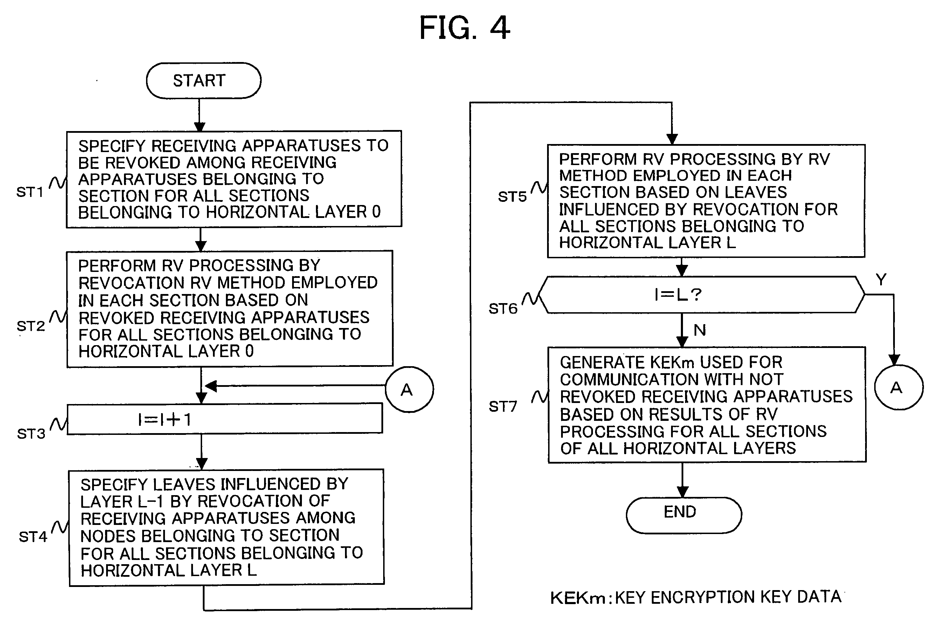

FIG. 4 is a flow chart for explaining the key acquisition method of the present embodiment.

Below, an explanation will be given of the steps shown in FIG. 4.

Step ST1:

The processing unit 13 specifies, for all sections belonging to the horizontal layer 0 (the lowermost layer) of the tree, any receiving apparatuses to be revoked among the receiving apparatuses 4_1 to 4_N allocated to leaves of the sub trees in which the sections are included.

Further, the processing unit 13 assigns an initial value "0" for $\ell$.

Step ST2:

The processing unit 13 performs the processing for revoking, for each of the sections belonging to the horizontal layer 0 of the tree, any receiving apparatuses specified at step ST1 by the revocation method employed for the sub tree where that section is included.

Namely, the processing unit 13 performs the revocation processing based on the employed revocation (RV) method and generates the data used for determining the key encryption key data KEK used for the communication with the receiving apparatuses not to be revoked among the receiving apparatuses 4_1 to 4_N belonging to the sub trees, for example, the data indicating the locations etc. of leaves to be revoked.

Step ST3:

The processing unit 13 increments $\ell$. Namely, it computes $\ell=\ell+1$.

Step ST4:

The processing unit 13 specifies, for each of all sections belonging to the horizontal layer k of the tree, any leaves having receiving apparatuses to be revoked in the lower layer thereof, that is, any leaves influenced by revocation among leaves (nodes and root of the horizontal layer $\ell$-1) of the sub tree where that section is included.

Step ST5:

The processing unit 13 performs the processing for revoking, for each of all sections belonging to the horizontal layer 1 of the tree, any leaves specified at step ST41 by the revocation method employed for the sub tree where that section is included.

Namely, the processing unit 13 performs the revocation processing based on the employed revocation (RV) method and generates the data used for determining the key encryption key data KEK used for communication with the receiving apparatuses existing in the lower layer of the leaves not influenced by the revocation among the leaves belonging to that sub tree, for example, the data indicating the locations of any nodes to be revoked.

Step ST6:

The processing unit 13 decides whether or not k=K. When deciding that $\ell$=L, it ends the processing, while when not deciding so, it returns to the processing of step ST3.

Step ST7:

The processing unit 13 generates the key encryption key data KEKm used for the communication with the receiving apparatuses 4_1 to 4_N not to be revoked based on the result of the RV processing performed for all sections belonging to all horizontal layers by steps ST1 to ST6. Here, m is an integer of 1 to M, and M indicates the number of key encryption key data KEK used for communication with all receiving apparatuses not to be revoked.

In this case, there is a case where a plurality of not revoked receiving apparatuses use a common key encryption key data KEKm in accordance with the locations of the receiving apparatuses to be revoked on the tree.

Next, an explanation will be given of the key acquisition method SKT-A as the key acquisition method SKT employed in the present embodiment.

The key acquisition method SKT-A is characterized in that the amount of the label data LABEL and the key data K_ORG stored by the receiving apparatuses 4_1 to 4_N is smaller than that in the LSD method disclosed in the Non-patent Document 1, and the amount of communication between the key management device 3 and the receiving apparatuses 4_1 to 4_N accompanied with the revocation processing is smaller than that in the CST method disclosed in the Non-patent Document 2.

First, an explanation will be given of the key acquisition method SKT-A.

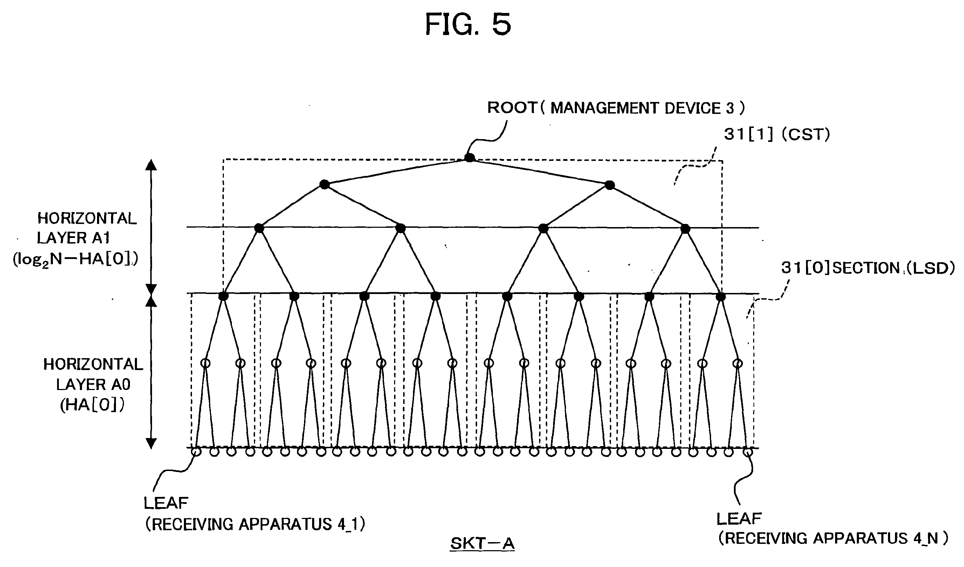

FIG. 5 is a view for explaining the key acquisition method SKT-A.

As shown in FIG. 5, in the key acquisition method SKT-A, the tree is divided to two horizontal layers A0 and A1.

The height of the lowermost horizontal layer A0 is defined as HA[0], and the height of the horizontal layer A1 is defined as $(\log 2N - HA[0])$. Here, N indicates the total number of receiving apparatuses 4_1 to 4_N.

As the revocation method of the sections 31[0] belonging to the horizontal layer A0, the LSD method disclosed in the Non-patent Document 1 is employed.

Further, as the revocation method of the sections 31[1] belonging to the horizontal layer A1, the CST method disclosed in the Non-patent Document 2 is employed.

Here, in the key acquisition method SKT-A, assume that the revocation of R number of the receiving apparatuses 4_1 to 4_N influences the ROA number of sections configuring the tree.

In this case, the dimension of the amount of communication between the key management device 3 and the receiving apparatuses 4_1 to 4_N not to be revoked accompanied with the revocation becomes O(COA) shown in the following formula (2) in the case of the key acquisition method SKT-A.

(Formula 2)

$$O(COA) = (R + ROA((\log 2N) - HA[0]) - ROA\log 2ROA) \quad \cdots \quad (2)$$

Below, an explanation will be given of the CST method.

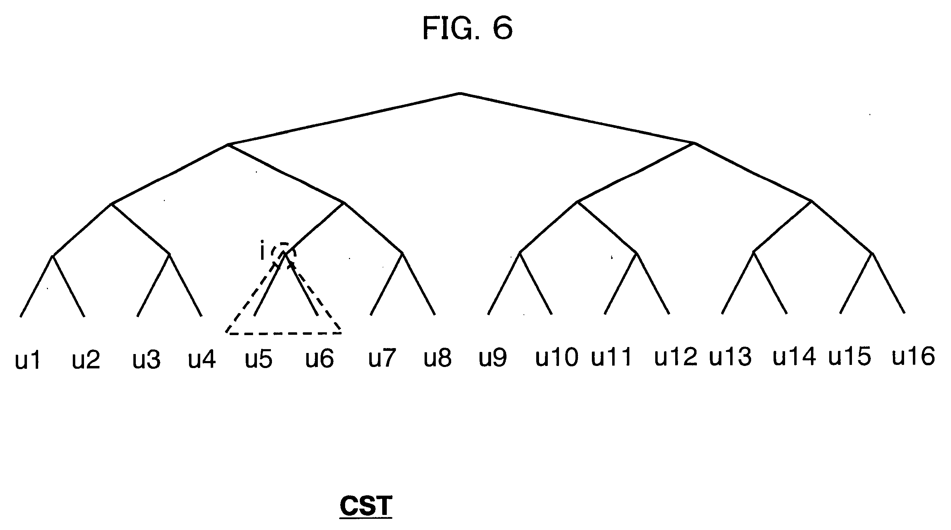

FIG. 6 to FIG. 8 are views for explaining the CST method.

In the following explanation, as shown in FIG. 6, a case where the revocation method is carried out for 16 receiving apparatuses u1 to u16 by the CST method will be exemplified.

In the CST method, a "set comprised of receiving apparatuses allocated to leaves of bisecting trees having the nodes thereof as vertexes" is defined by using nodes of the bisecting trees.

In the example shown in FIG. 6, the node i indicates a set having as elements the receiving apparatuses u5 and u6. A node key (corresponding to the key data K_ORG in the SKT-A) is defined for each node.

Each receiving apparatus is given the node keys allocated to the nodes on the path from the leaf to which the receiving apparatus is allocated to the root of the tree to which the key management device is allocated. The receiving apparatus holds these node keys in a safe memory.

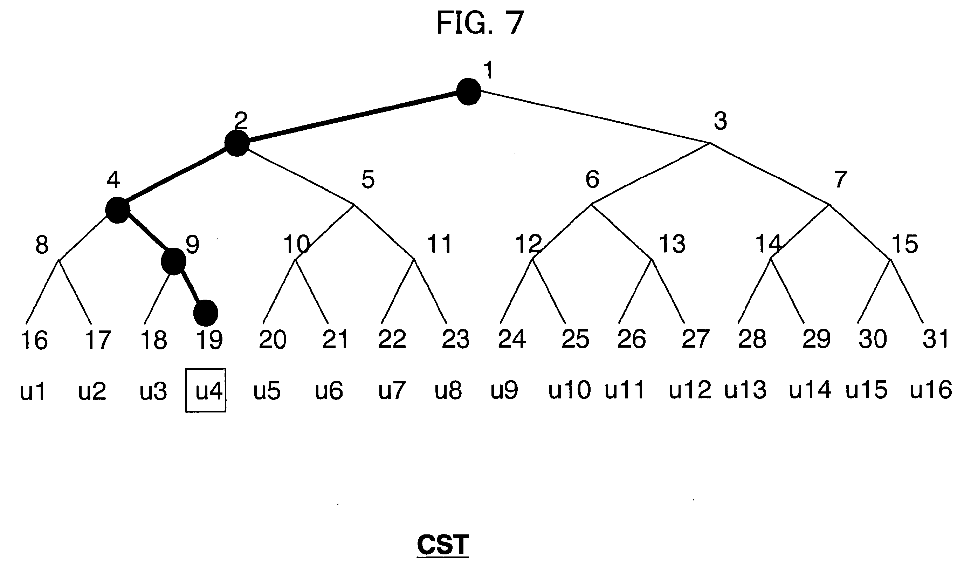

As shown in FIG. 7, the receiving apparatus u4 is given five node keys allocated to nodes 1, 2, 4, 9, and 19.

Namely, when the number of all receiving apparatuses is N, each receiving apparatus holds logN+1 number of node keys.

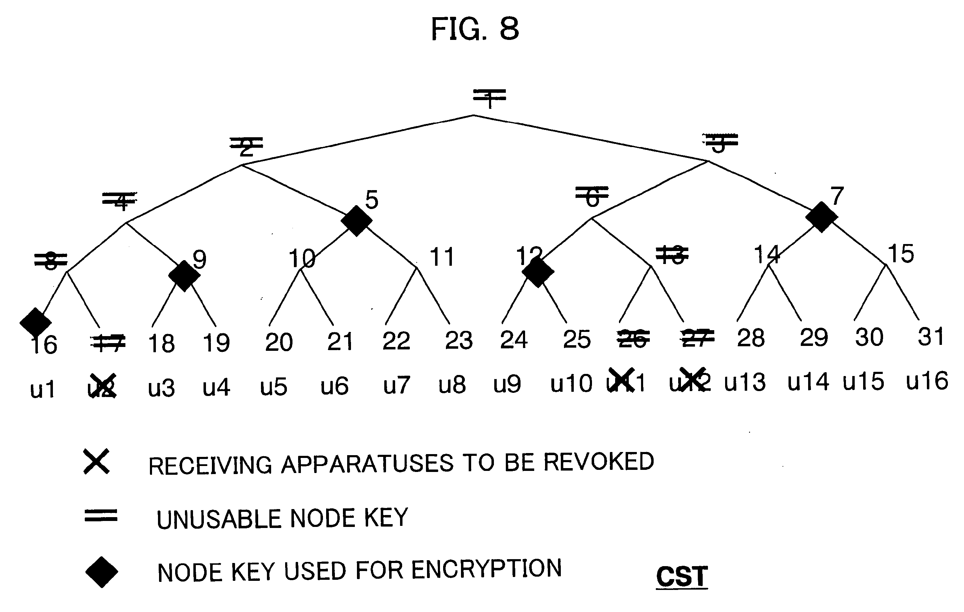

FIG. 8 is a view for explaining how secret information (for example content keys for decoding the encrypted content) is transmitted to the receiving apparatuses not to be revoked.

Here, the receiving apparatuses u2, u11, and u12 are made the receiving apparatuses to be revoked.

In this case, the node keys allocated to the nodes on the paths from the leaves to which the receiving apparatuses u2, u11, and u12 to be revoked to the root of the tree are allocated cannot be used. This is because if these node keys are used, the receiving apparatuses to be revoked can obtain the secret information.

Then, when excluding these nodes and paths from the tree, one or more sub trees (partial trees) remain.

The efficient and safe transmission of the secret information is carried out by encrypting the secret information by using the node keys allocated to the nodes nearest the vertexes of the sub trees (nodes 5, 7, 9, 12, 16 in FIG. 8) and transmitting the same.

The receiving apparatus decrypts what it can decrypt itself in the transmitted encrypted text, that is, what was encrypted using the node key corresponding to the node on the path from the leaf to which it itself is allocated to the root, to obtain the secret information.

In the above example, for example the receiving apparatus u4 holds the node key of the node 9, so decodes the encrypted text by using this.

In the CST method, there is always one encrypted text which can be decrypted by a receiving apparatus not to be revoked.

Next, an explanation will be given of the SD (subset Difference) method as the prerequisite of the LSD method.

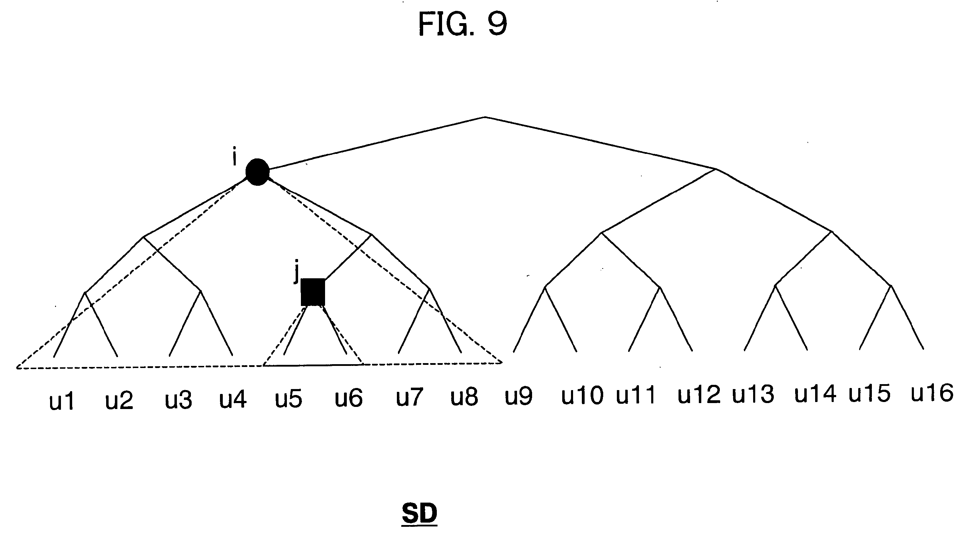

FIG. 9 to FIG. 12 are views for explaining the SD method.

As mentioned above, in the CST method, a "set comprised of receiving apparatuses allocated to leaves of sub trees having a node thereof as a vertex" is expressed by using a node of the tree.

Contrary to this, in the SD method, a "set obtained by subtracting (a set comprised of leaves of sub trees having the node j as a vertex) from (a set comprised of leaves of sub trees having the node i as a vertex)" is defined by using two nodes i,j (note, i is the node of the predecessor of j) of the tree.

For example, a set S (i,j) defined by the nodes i,j shown in FIG. 9 is the set obtained by excluding the receiving apparatuses u5 and u6 from the set of the receiving apparatuses u1 to u8, that is S(i,j) = {u1, u2, u3, u4, u5, u6, u7, u8, u9}-{u5, u6}.

Such a set is defined for all sets of nodes in which the node i is the precedessor of the node j (that is, the node j is not the same as the node i, and the node i exists on the path from the node j to the root).

Further, the label data LABEL is allocated to each set. Further, a predetermined operation (for example, generation of pseudo random numbers using the label data LABEL as the key) is carried out based on the label data LABEL to obtain the subset key.

The subset key is used as the key encryption key data KEK in the communication between the receiving apparatuses of the elements of the set and the key management device.

In the SD method, the number of the sets to which one receiving apparatus belongs becomes O(N), therefore if the key data SK (subset key) is independently allocated to each set (subset), each receiving apparatus must safely hold the label data LABEL corresponding to O(N) subset keys, but it is actually difficult if N is large.

For this reason, by the following skill, in the SD method, the number of the label data LABEL held by each receiving apparatus is reduced.

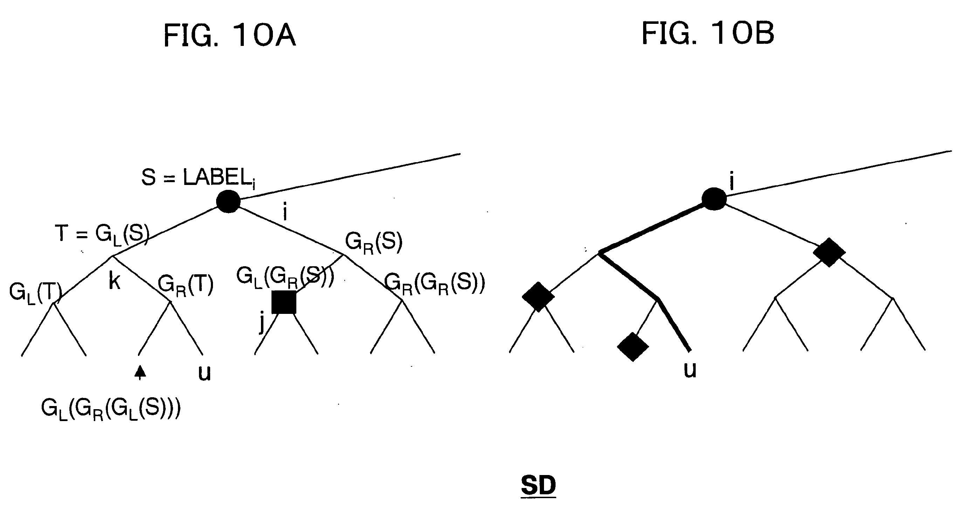

For example, as shown in FIG. 10A, by paying attention to an internal node (that is, a node which is not a leaf) i, the value S of C bits is selected at random as the label data LABEL (i) of that node.

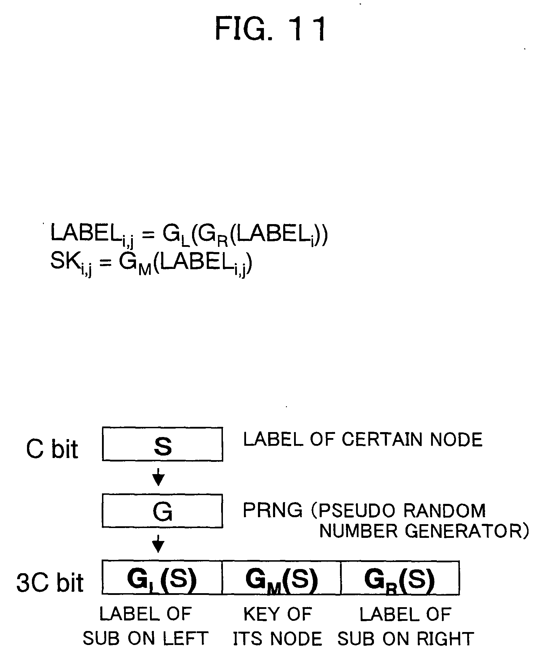

Next, as shown in FIG. 11, the value S of the LABEL (i) is input to the pseudo random number generator G having C bits of input and 3C bits of output.

Then, the output of 3C bits from the pseudo random number generator G is divided into sections each consisting of C bits from the left (from the higher bit side) and defined as GL(S), GM(S), and GR(S).

Then, GL(S) is defined as the label data LABEL of the sub node on left side (one) of the node i, and GR(S) is defined as the label data LABEL of the sub node on right side (the other) of the node i.

Due to this processing, for the child node k at the left side of the node i in FIG. 10A and 10B, the label data LABEL (i,k) of the node k having the node i as the start point becomes LABEL(i,k)=GL(S). Then, this is defined as T.

Next, T is input to the pseudo random number generator G, and the output thereof is divided into sections each consisting of C bits from the left to obtain GL(T) , GM(T) , and GR(T).

Then, GL(T), GM(T), and GR(T) are defined as a label data LABEL (i,kL) of the sub node L on the left side of the node k when the node i is used as the start point, a label data LABEL (i,k) of the node k when the node i is used as the start point, and a label data LABEL (i,kR) of the sub node kR on right side of the node k when the node i is used as the start point.

By repeating this processing, a label corresponding to all nodes which become a descendant of the node i when the node i is used as the start point is created.

Note that according to the above definition, the set S(i,i) is an empty set, and when the node i is used as the start point, the key of the node i is unnecessary, so the GM(S) of the center portion where the LABEL(i) is input to the pseudo random number generator G is not used.

As shown in FIG. 10A, the value S of the label data LABEL (i) of the node i of the start point is determined, the GR(S) becomes the label data LABEL of the sub node at the right of the node i when the node i is used as the start point, and further the GL(S) obtained by inputting that to the pseudo random number generator G becomes the label data LABEL of the node j when the node i is used as the start point

This processing is all carried out with respect to all internal nodes i.

These processings are carried out by the key management device at the time of the set up of the system, but the pseudo random number generator (or pseudo random number generation function) G is determined by the key management device and publicly disclosed. By using this, the receiving apparatus given the LABEL (i,j) can compute labels LABEL (i,n) of all nodes n which become the descendants of the node j when the node i is used as the start point and can compute the node j and the subset keys SK(i,n) of the sub nodes n thereof where the node i is used as the start point.

If doing this, as shown in FIG. 10B, a certain receiving apparatus u becomes able to create a subset key having the node i as a start point of that node and the nodes following that (which become the descendant of that) if only the label data LABEL of the node directly branched from the path from the leaf to i using the node i as the start point is held for each internal node i on the path from the leaf to which the receiving apparatus u is allocated to the vertex of the tree. In FIG. 10B, when paying attention to the node i, the number of nodes directly branched from the path from u to i is three, and the receiving apparatus u receives these three label data LABEL from the key management device at the time of the set up of the system.

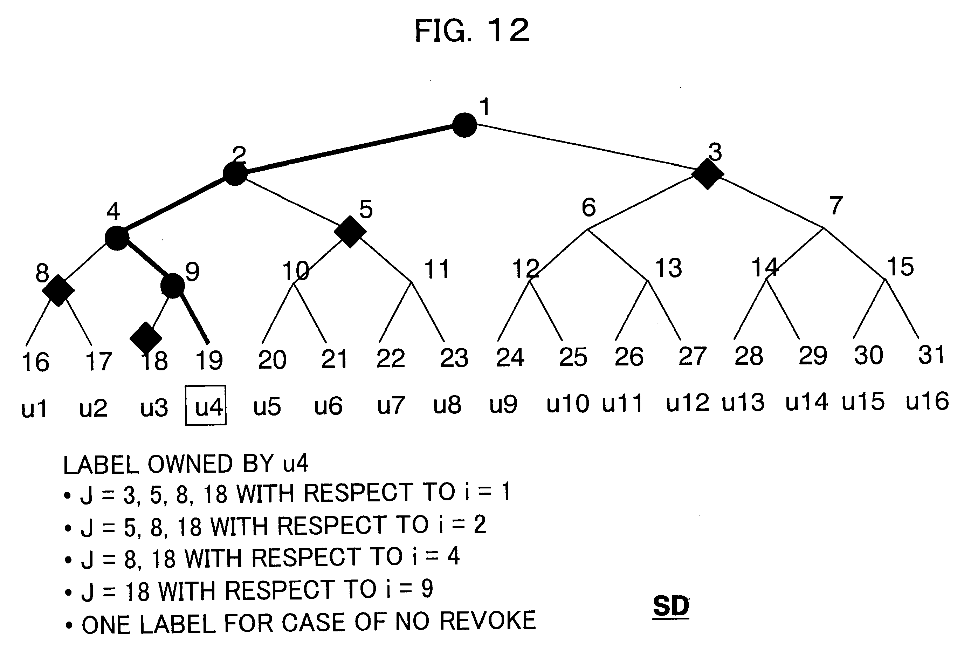

Below, the receiving apparatus u4 will be considered in the example shown in FIG. 12.

For the receiving apparatus u4, internal nodes 1, 2, 4, and 9 on the path from the node 19 of the leaf to which the receiving apparatus u4 is allocated to the root 1 become the start points (node i). When using the node 1 as the start point, the nodes directly branched from the path from the node 19 to the node 1 are the four nodes of 3, 5, 8, and 18, so the receiving apparatus u4 holds LABELs (1,3), (1,5), (1,8), and (1,18).

In the same way as above, it holds the three label data LABEL of LABELs (2,5), (2,8), and (2,18) when the node 2 is used as the start point, holds the two label data LABEL of LABELs (4, 8) and (4,18) when the node 4 is used as the start point, and holds the LABEL (9,18) when the node 9 is used as the start point.

Further, it holds one label data LABEL (1) corresponding to the set including all receiving apparatuses (this will be expressed as S1,φ) used in a special case where there is no receiving apparatus to be revoked.

Note that while made the label data LABEL corresponding to S(1),φ, it is also possible not to use the label data LABEL, but to directly hold the subset key corresponding to S1,φ.

As described above, each receiving apparatus must hold the label data LABEL of exactly the amount of the height of the internal nodes thereof for internal nodes on the path from the leaf to the root.

These label data LABEL enable the creation of the subset key by using the publicly disclosed G, so the receiving apparatus holds them safely.

Below, an explanation will be given of the LSD (Basic Layered Subset Difference) method using the above SD method as the basis.

The LSD method includes a basic method and a general method as an extension thereof. Here, an explanation will be given of the basic method.

The LSD method is an extension of the SD method and introduces the new concept of a "layer". A specific height in the tree structure in the SD method is defined as a "special level".

In the basic_LSD method, there is only one type of special level, but the general_LSD method uses a plurality of special levels having different importances.

Here, for simplification, assume that log1/2N is an integer.

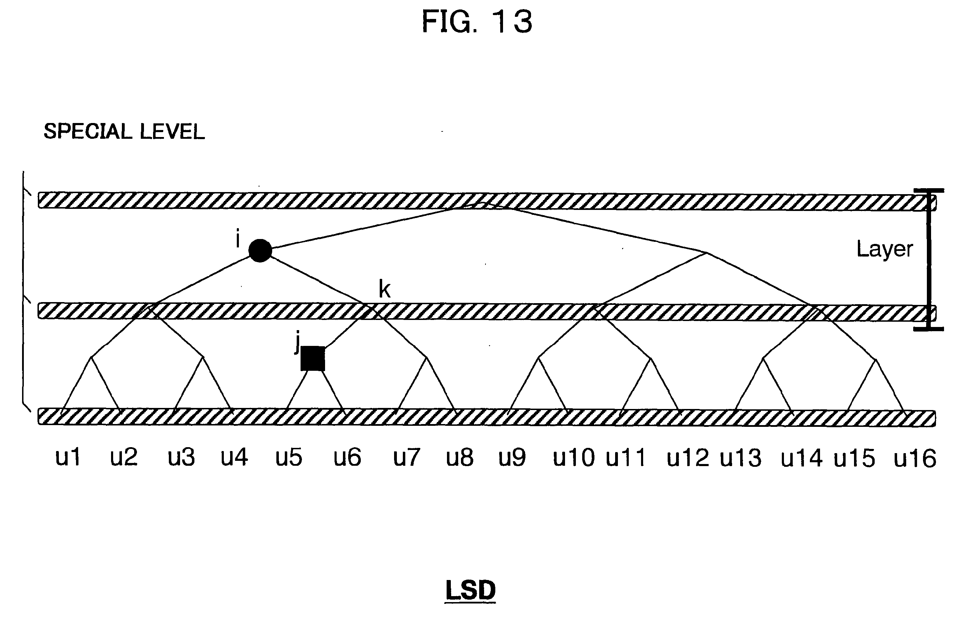

In the basic_LSD method, as shown in FIG. 13, among the levels (steps) from the root of the tree to the leaves, the levels for each log1/2N including levels of the root and leaves are defined as "special layers".

Any stratum sandwiched between two adjoining special layers (including both special levels) will be referred to as a "layer".

In the example of FIG. 13, the level of the root, the level including the node k, and the level of the leaves are special levels, and the level of the root, the level including the node i, and the level including the node k configure single layers. Further, the level including the node k, the level including the node j, and the level including the leaves configure other layers.

In the basic_LSD method, among the subsets S(i,j) defined in the SD method, only the subset in which the node i and the node j are in the same layer or the node i is at the special level are defined.

If doing this, some of the subsets used in the SD method are no longer defined in the basic_LSD method, but these subsets can be expressed by two sum sets at most among subsets defined by the basic_LSD method.

For example, in the example of FIG. 13, the subset S(i,j) is not defined in the basic_LSD method, but can be expressed as S(i,j)=S(i,k)∪S(k,j) by using the node (node k) on the special level nearest the node i on the path from the node i to the node j.

That is, in the SD method, in place of one encrypted text encrypted by using the subset key Sk(i,j) corresponding to the subset S(i,j), in the basic_LSD method, two encrypted texts encrypted by using subset keys Sk(i,k) and SK(k,j) corresponding to the subsets S(i,k) and S(k,j) are transmitted.

Due to this, the number of encrypted texts to be transmitted is increased by two times from the SD method at most, but the number of labels held by each receiver can be reduced.

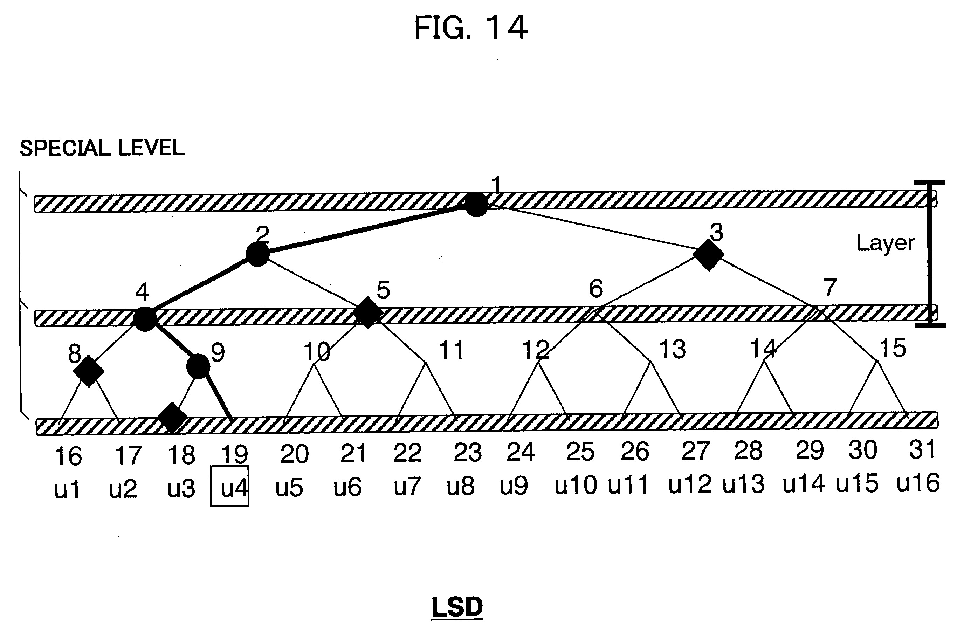

In FIG. 14, a case where the basic_LSD method is applied to the same case as that assumed in the SD method of FIG. 12 will be explained.

The receiving apparatus u4 shown in FIG. 14 may hold only the label data LABEL (i,j) in which i, j exist in the same LAYER or i exists at the special level.

Namely, the label data LABEL held by the receiving apparatus u4 becomes the label data LABEL (1,3), (1,5), (1,8), (1,18), (2,5), (4,8), (4,18), and (9,18).

Further, in the same way as the SD method, it is necessary to also hold the special label used where there is no receiver to be revoked.

Below, an explanation will be given of an example of operation of the key management device 3 shown in FIG. 2.

The operation of the key management device 3 is realized by the processing of the processing unit 13 based on the program PRG1 as mentioned above.

[Example of operation of pre-processing]

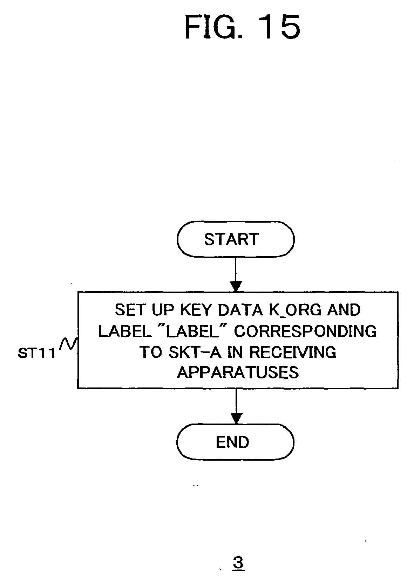

FIG. 15 is a flow chart for explaining an example of operation of the case where the key management device 3 performs the pre-processing.

As explained above, the processing unit 13 of the key management device 3 performs the following pre-processing for example at the time of the registration of the receiving apparatuses 4_1 to 4_N preceding the revocation processing.

Step ST11:

The key management device 3 sets up the key acquisition method SKT-A and the key data K_ORG and the label data LABEL used in the key acquisition method SKT-A in the receiving apparatuses 4_1 to 4_N.

Specifically, for each of the receiving apparatuses 4_1 to 4_N, the key management device 3 sets up the label data LABEL for acquiring a plurality of label data LABEL allocated to a plurality of sets defined so that there are sets having as elements only receiving apparatuses not to be invalidated in the sub trees even if any other receiving apparatus in the sub trees to which the receiving apparatuses in the horizontal layer A0 shown in FIG. 5 belong are invalidated.

Further, for each of the receiving apparatuses 4_1 to 4_N, the key management device 3 sets up a plurality of key data K_ORG allocated to all nodes located on the path between the node on the terminal end corresponding to the receiving apparatus in the horizontal layer A1 shown in FIG. 5 and the root.

The key management device 3 performs the above set up individually in a secure state for the receiving apparatuses 4_1 to 4_N at the time of for example the issuance or registration of the receiving apparatuses 4_1 to 4_N.

[Example of operation of revocation processing]

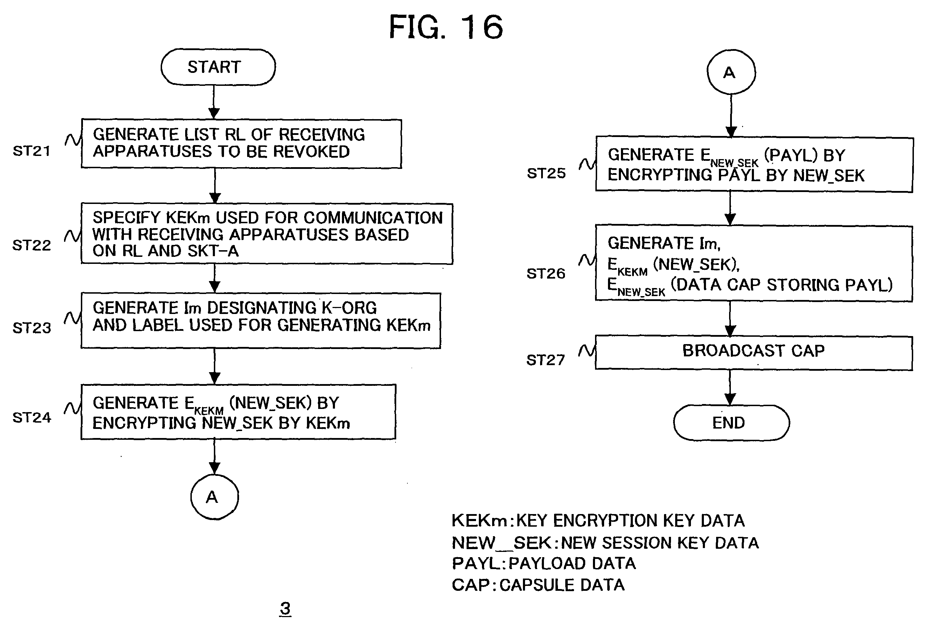

FIG. 16 is a flow chart for explaining an example of the operation of the case where the key management device 3 performs the revocation processing mentioned above.

The processing unit 13 of the key management device 3 performs the revocation processing when any of the receiving apparatuses 4_1 to 4_N is to be revoked.

Step ST21:

The key management device 3 generates a revocation list RL indicating any receiving apparatuses to be revoked among the receiving apparatuses 4_1 to 4_N.

Step ST22:

The key management device 3 specifies the key encryption key data KEKm used for communication with the receiving apparatuses 4_1 to 4_N not to be revoked based on the revocation list RL generated at step ST21 according to the key acquisition method SKT_A.

A detailed explanation will be given of the processing later.

Step ST23:

The key management device 3 generates the key designation data Im designating the key data K ORG and the label data LABEL necessary for generating the key encryption key data KEKm specified at step ST22.

Note that the designation of the key data K_ORG and the label data LABEL in the key designation data Im is carried out based on identification data such as an index allocated to the key data K_ORG and label data LABEL and does not include the key data K_ORG and the label data LABEL per se.

Step ST24:

The key management device 3 encrypts the new session key data NEW_SEK (after update) by the key encryption key data KEKm generated at step ST23 to generate the data EKEKm (NEW_SEK).

Step ST25:

The key management device 3 encrypts the payload data PAYL as the secret information provided to the receiving apparatuses 4_1 to 4_N by using the new session key data NEW_SEK to generate the data ENEW_SEK (PAYL).

Step ST26:

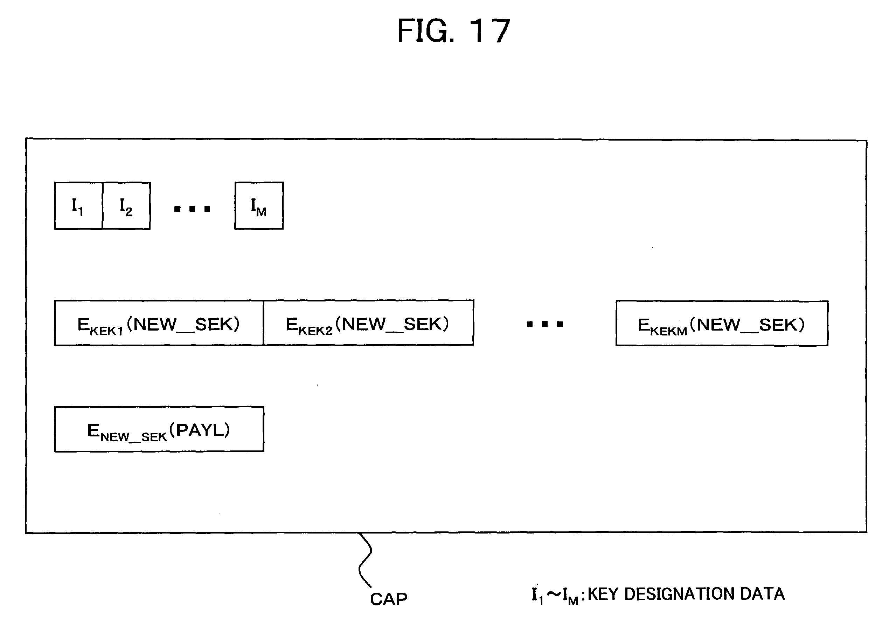

The key management device 3 generates the capsule data CAP shown in FIG. 17 as the data storing the key designation data Im (I1 to IM) generated at step ST25, the data EKEKm (NEW_SEK) generated at step ST24, and ENEW_SEK (PAYL) generated at step ST25.

Step ST27:

The key management device 3 broadcasts (transmits) the capsule data CAP generated at step ST26 via the communication unit 11 shown in FIG. 2 by for example the wireless method.
The broadcast is so-called PUSH distribution.
Below, a detailed explanation will be given of step ST23 shown in FIG. 16.

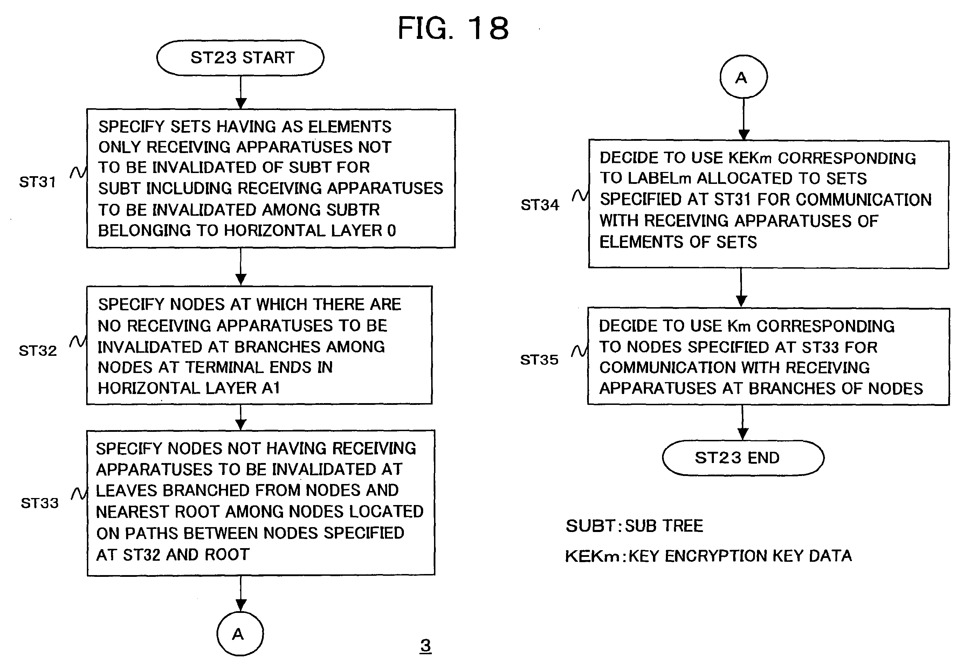

FIG. 18 is a view for explaining step ST23 shown in FIG. 16, that is, the method of specifying the key encryption key data KEK based on the key acquisition method SKT_A.
In FIG. 18, step ST31 corresponds to the first step of the first aspect of the invention, step ST32 corresponds to the second step of the first aspect of the invention, step ST33 corresponds to the third step of the first aspect of the invention, and steps ST34 and ST35 correspond to the fourth step of the first aspect of the invention.
Further, the first means, the second means, and the third means of the third invention are realized by the processing unit 13 executing steps ST31, ST32, and ST33. Further, the fourth means of the third invention is realized by the processing unit 13 executing steps ST34 and ST35.

Step ST31:

The key management device 3 specifies sets having as elements only receiving apparatuses not to be invalidated in the sub trees from among a plurality of sets, defined in advance, having as elements receiving apparatuses belonging to the sub trees, for all sub trees including receiving apparatuses to be revoked among the sub trees (SUBT) belonging to the horizontal layer A0 shown in FIG. 5.

Step ST32:

The key management device 3 specifies nodes not having any receiving apparatuses to be invalidated at the branches of the nodes among the nodes at the terminal ends in the horizontal layer A1 shown in FIG. 5.

Step ST33:

The key management device 3 specifies nodes not having any receiving apparatuses to be invalidated at the leaves branched from the nodes and nearest the root among the nodes located on the paths between the nodes and the root for all nodes specified at step ST32.

Step ST34:

The key management device 3 decides to use the key encryption key data KEKm linked with the sets (or the label data LABEL thereof) specified at step ST31 for communication with the receiving apparatuses 4_1 to 4_N of elements of the sets.
The key management device 3 holds for example the above sets of all subsets in the horizontal layer A0 shown in FIG. 5 and the key encryption key data KEKm linked together and specifies the key encryption key data KEK corresponding to the sets specified at step ST31.
Further, it is also possible for the key management device 3 to hold for example the label data LABEL (i,j) in which the node i and the node j exist in the same LAYER or the node i is at the special level among subsets S(i,j) as the above sets in the horizontal layer A0 shown in FIG. 5, generates the label data LABEL by the method explained by using FIG. 10A, 10B and FIG. 11, and generates the key encryption key data KEKm as the subset key thereof based on this label data LABEL.

Then, the key management device 3 generates the key designation data Im for designating the label data LABEL used by the receiving apparatuses 4_1 to 4_N of the elements of the above specified set for generating the above specified (generated) key encryption key data KEKm.

Step ST35:

The key management device 3 decides to use the key data K_ORG (node key) corresponding to the nodes specified at step ST33 for communication with the receiving apparatuses 4_1 to 4_N in the branches of the nodes.

Then, the key management device 3 generates the key designation data Im designating the key data K_ORG as the determined key encryption key data KEKm.

[Receiving apparatuses 4_1 to 4_N]

The receiving apparatuses 4_1 to 4_N are for example PDAs (personal digital assistants), mobile phones, or other ubiquitous terminal equipment.

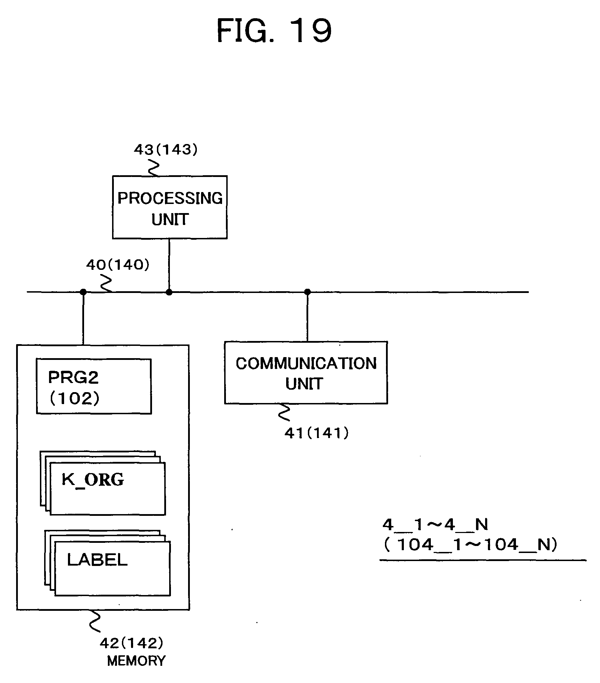

FIG. 19 is a view of the hardware configuration of the receiving apparatuses 4_1 to 4_N shown in FIG. 1.

The receiving apparatuses 4_1 to 4_N have the same configuration except the key data K_ORG and the label data LABEL stored in the memory 42.

As shown in FIG. 19, the receiving apparatuses 4_1 to 4_N have for example communication units 41, memories 42, and processing units 43.

Here, the memories 42 correspond to the storing means of the fourth aspect of the invention, and the processing units 43 correspond to the processing means of the fourth aspect of the invention.

The communication units 41 receive the capsule data CAP transmitted by the key management device 3 by the PUSH method by the wireless method.

The memories 42 store a program PRG2 executed by the processing units 43 and various data used for the execution of the program PRG2.

The program PRG2 includes processing routines of the key acquisition method SKT_A.

The memories 42 store the key data K_ORG and the label data LABEL allocated to each of the receiving apparatuses 4_1 to 4_N by the pre-processing by the key management device 3.

Specifically, even when any other receiving apparatuses in sub trees to which the receiving apparatuses in the horizontal layer A0 belong are to be invalidated, the memory 42 stores the label data LABEL (the third key data of the fourth aspect of the invention) for acquiring a plurality of label data LABEL (the first key data of the first to fourth aspects of the inventions) allocated to the plurality of sets defined so that there are sets having as elements only receiving apparatuses not to be invalidated in the sub trees.

Further, the memories 42 store a plurality of key data K_ORG (the second key data of the first to fourth aspects of the invention) allocated to all nodes located on the paths between the nodes at the terminal ends corresponding to the receiving apparatuses in the horizontal layer A1 and the root.

Here, the order of the amount of the key data K_ORG and the label data LABEL to be stored by the memory 42 becomes O(STA) shown in the following formula (3).

$$\text{(Formula 3)}$$

$$O(STA) = ((HA[0])L5 - HA[0] + \log 2N)$$

$$\text{(3)}$$

The processing units 43 execute the program PRG2 stored in the memories 42 and centrally control the processings of the receiving apparatuses 4_1 to 4_N in accordance with the execution thereof. In the present embodiment, the processings of the receiving apparatuses 4_1 to 4_N are defined by the program PRG2 executed by the processing unit 43.

The functions of the processing units 43 defined by the program PRG2 are configured so that even the receiving apparatuses 4_1 to 4_N cannot be controlled by the users. Further, the users of the receiving apparatuses 4_1 to 4_N use the receiving apparatuses 4_1 to 4_N with absolutely no awareness of these functions.

Below, an explanation will be given of an example of the operation of the receiving apparatuses 4_1 to 4_N.

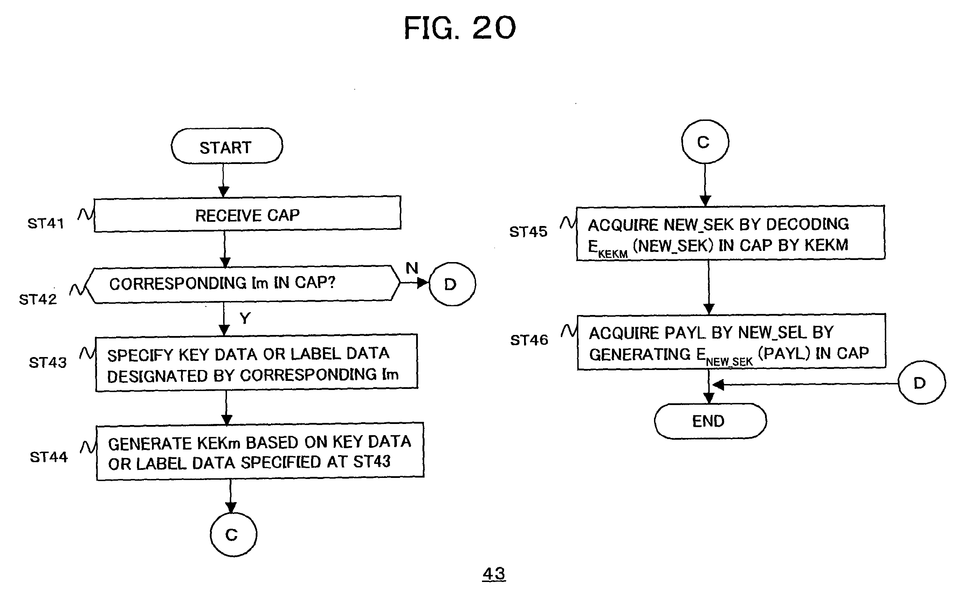

FIG. 20 is a flow chart for explaining an example of the operation of the receiving apparatuses 4_1 to 4_N.

Note that the operations of the receiving apparatuses 4_1 to 4_N are defined by the processing units 43 executing the program PRG2.

Step ST41:

The communication units 41 of the receiving apparatuses 4_1 to 4_N receive the capsule data CAP broadcast by the key management device 3 at step ST27 shown in FIG. 16.

Step ST42:

The processing units 43 of the receiving apparatuses 4_1 to 4_N decide whether or not their corresponding key designation data Im are included in the capsule data CAP received at step ST41. When deciding that the data Im are included, they proceed to the processing of step ST43, while when the data Im are not included, they end the processing.

Step ST43:

The processing units 43 acquire their corresponding key designation data Im in the capsule data CAP.

Then, the processing units 43 specify the key data K_ORG or the label data LABEL designated by the key designation data Im acquired at step ST42 from among the key data K_ORG and the label data LABEL stored by the memory 42.

Step ST44:

The processing units 43 acquire (generate) the key encryption key data KEKm based on the key data K_ORG or the label data LABEL specified at step ST43.

The processing of step ST44 will be explained in detail later.

Step ST45:

The processing units 43 acquire new session key data NEW_SEK by decoding the data EKEKm (NEW_SEK) in the capsule data CAP by using the key encryption key data KEKm acquired (generated) at step ST44.

Step ST46:

The processing units 43 decodes the data ENEW_SEK (PAYL) in the capsule data CAP by using new session key data NEW_SEK acquired at step ST45 to acquire the payload data PAYL.

The receiving apparatuses 4_1 to 4_N use the session key data NEW_SEK acquired at step ST45 in order to decode the data received from the key management device 3 until the revocation processing is carried out next.

Below, an explanation will be given of the processing of step ST44 shown in FIG. 20.

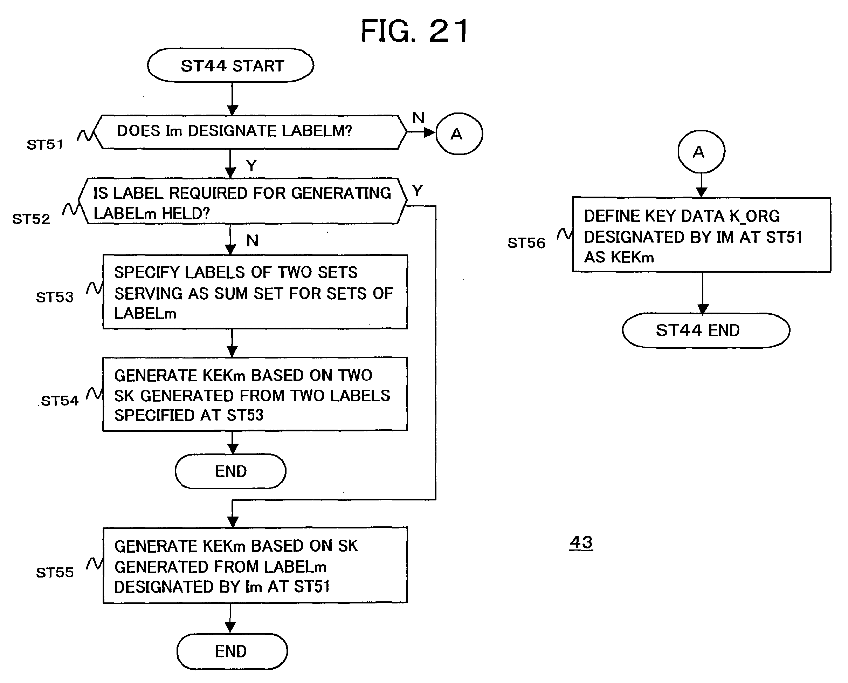

FIG. 21 is a flow chart for explaining the processing of step ST44 shown in FIG. 20.

Step ST51:

The processing units 43 decide whether or not the key designation data Im acquired at step ST43 shown in FIG. 20 designates the label data LABELm. When deciding that the data Im designates the label data LABEL, they proceed to step ST52, while when not deciding so, they proceed to step ST56.

Step ST52:

The processing units 43 decide whether or not the memories 42 store (hold) the label data LABEL required for generating the label data LABELm designated by the key designation data Im. When they decide that the memories 42 store it, they proceed to step ST55, while when they do not decide so, they proceed to step ST53.

Step ST53:

The processing units 43 specify the label data LABEL corresponding to two sets defining the sets corresponding to the label data LABELm designated by the key designation data Im as the sum set.

Step ST54:

The processing units 43 generate two label data LABEL specified at step ST53 based on the label data LABEL stored in the memories 42 according to need.

Then, the processing units 43 generate two subset keys SK by generating pseudo random numbers based on the pseudo random number generator G using the two label data LABEL as the keys.

Then, the processing units 43 generate the key encryption key data KEKm based on the two subset keys SK.

Step ST55:

The processing units 43 generate the label data LABELm designated by the key designation data Im based on the label data LABEL stored in the memories 42 according to need.

Then, the processing units 43 generate pseudo random numbers based on the pseudo random number generator G by using the label data LABELm as the key to generate the subset key SK.

Then, the processing units 43 define the subset key SK as the key encryption key data KEKm.

Step ST56:

The processing units 43 define the key data K_ORG designated by the key destination data Im as the key encryption key data KEKm.

Below, an explanation will be given of an example of the overall operation of the communication system 1.

First, the key management device 3 distributes the predetermined key data K_ORG and label data LABEL to the receiving apparatuses 4_1 to 4_N by the pre-processing explained above by using FIG. 15.

Then, when the predetermined receiving apparatuses 4_1 to 4_N are to be revoked, the key management device 3 distributes the capsule data CAP to the receiving apparatuses 4_1 to 4_N not to be revoked by the technique explained above by using FIG. 16 and FIG. 18.

Then, the receiving apparatuses 4_1 to 4_N perform the processing explained by using FIG. 20 and FIG. 21, and the receiving apparatuses 4_1 to 4_N not to be revoked obtain the decoded payload data PAYL based on the new session key data NEW_SEK.

As explained above, in the communication system 1, the pre-processing explained above by using FIG. 15 is used to set up and store the key data K_ORG and the label data LABEL in the receiving apparatuses 4_1 to 4_N.

In the communication system 1, the amount (O(STA) of formula (3)) of the key data and the label data LABEL stored in the receiving apparatuses 4_1 to 4_N is larger than the (O(log2N)) in the case of the CST method, but can be made smaller than (O((log2N)2), O((log2N)1+a), a>1) in the case of the SD method and the LSD method. Namely, in the communication system 1, by employing the CST method for the horizontal layer A1 by the key acquisition method SKT_A, in comparison with the case where the SD method or the LSD method is employed for the entire tree, the amount of the key data and the label data stored by the receiving apparatuses 4_1 to 4_N can be reduced.

Further, in the communication system 1, by employing the key acquisition method SKT_A, the number of the key encryption key data KEKm used for communication with the receiving apparatuses 4_1 to 4_N accompanied with the revocation processing, that is, the amount of communication (O(COA)) of formula (2)) between the key management device 3 and the receiving apparatuses 4_1 to 4_N, can be made smaller than (O(Rlog2N/R)) in the case of the CST method though larger than the case (O(R)) of the LSD method and the SD method. Namely, in the communication system 1, by the above key acquisition method SKT-B, by employing the LSD method for the horizontal layer A0, in comparison with the case where the CST method is employed for the entire tree, the amount of communication between the key management device 3 and the receiving apparatuses 4_1 to 4_N accompanied with the revocation processing can be reduced.

Due to this, according to the communication system 1, the amount of communication between the key management device 3 and the receiving apparatuses 4_1 to 4_N accompanied with the revocation processing and the amount of the key data held by the receiving apparatuses 4_1 to 4_N can be defined by a suitable trade off.

Further, in the communication system 1, the receiving apparatuses 4_1 to 4 N are configured so that the users cannot control the security function such as the key management explained above, so can improve the security function.

Further, the receiving apparatuses 4_1 to 4_N employ the SDR for the reception (download) from the key management device 3, so only the legitimate receiving apparatuses 4_1 to 4_N having authorization can automatically receive the data transmitted to the receiving apparatuses. Therefore, the security accompanied with the download can be improved.

Further, the users can use the receiving apparatuses 4_1 to 4_N with absolutely no awareness of these security functions.

Second Embodiment:

The second embodiment is an embodiment of the fifth to eighth aspects of the inventions.

As shown in FIG. 1, a communication system 101 of the present embodiment has for example a key management device 103 and a plurality of (N) receiving apparatuses 104_1 to 104_N.

Here, the key management device 103 corresponds to the key management side of the present invention and the data processing apparatus of the seventh aspect of the invention, and the receiving apparatuses 104_1 to 104_N correspond to the receiving apparatuses of the fifth to eighth aspects of the invention.

The transfer (communication) of the data is carried out between the key management device 103 and the receiving apparatuses 104_1 to 104_N by for example the wireless method.

The receiving apparatuses 104_1 to 104_N are registered in the key management device 3 in advance and hold the key data K_ORG and the label data LABEL used for the secret communication (secure communication) with the key management device 3.

The key management device 103 and the receiving apparatuses 104_1 to 104_N are the same as the key management device 3 and the receiving apparatuses 4_1 to 4_N of the first embodiment except the key acquisition method SKT-B shown below is employed in place of the key acquisition method SKT_A.

The key management device 103 has for example, as shown in FIG. 2, a communication unit 111, a memory 112, and a processing unit 113.

Further, the receiving apparatuses 104_1 to 104_N, for example as shown in FIG. 19, have communication units 141, memories 142, and processing units 143.

Below, an explanation will be given of the key acquisition method SKT_B in the present embodiment.

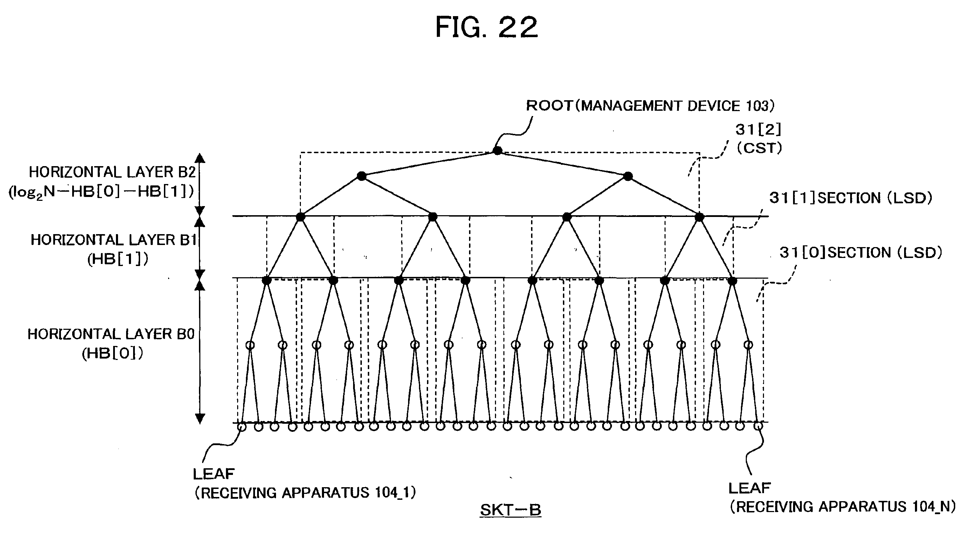

FIG. 22 is a view for explaining the key acquisition method SKT_B.

As shown in FIG. 22, in the key acquisition method SKT_B, the tree is divided into three horizontal layers B0, B1, and B2.

Here, the horizontal layers B0, B1, and B2 correspond to the first layer, the third layer, and the second layer of the fifth to eighth aspects of the invention.

The height of the lowermost horizontal layer B0 is defined as HB[0], the height of the horizontal layer B11 is defined as HB[1], and the height of the horizontal layer B2 is defined as (log2N-HB[0]-HB[1]).

Then, as the revocation method of each section 31[0] belonging to the horizontal layer B0, the LSD method disclosed in Non-patent Document 1 is employed.

Further, as the revocation method of each section 31[1] belonging to the horizontal layer B1, the LSD method disclosed in the above Non-patent Document 1 is employed.

Further, as the revocation method of each section 31[2] belonging to the horizontal layer B2, the CST method disclosed in the above Non-patent Document 2 is employed.

Below, an explanation will be given of the processings of the key management device 103 and the receiving apparatuses 104_1 to 104_N according to the key acquisition method SKT_B.

[Key management device 103]

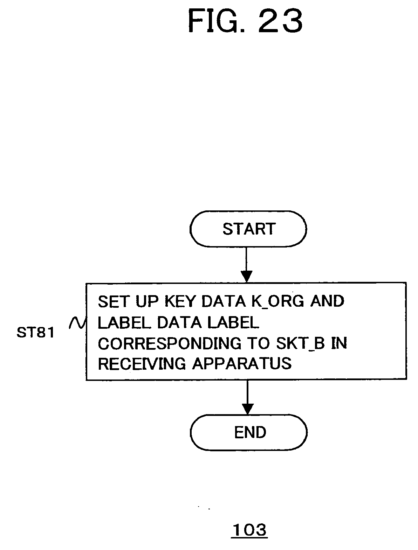

The key management device 103 performs the processing shown in FIG. 23 as the pre-processing corresponding to FIG. 15 of the first embodiment.

Step ST81:

The key management device 103 performs the following pre-processing at the time of for example the registration of the receiving apparatuses 104_1 to 104_N preceding the revocation processing.

The key management device 103 sets up the key acquisition method SKT_B and the key data K_ORG and the label data LABEL used in the key acquisition method SKT_B in the receiving apparatuses 104_1 to 104_N.

Specifically, the key management device 103 sets up the label data LABEL (the second key data of the eighth aspect of the invention) for acquiring a plurality of label data LABEL (the first key data of the eighth aspect of the invention) allocated to a plurality of sets defined so that there are sets having as elements only receiving apparatuses not to be invalidated in the sub trees even in a case where any other receiving apparatuses in the sub trees to which the receiving apparatuses in the horizontal layer B0 shown in FIG. 22 belong are invalidated for each of the receiving apparatuses 104_1 to 104_N.

Further, the key management device 103 sets up the label data LABEL (the fourth key data of the eighth aspect of the invention) for acquiring a plurality of label data LABEL (the third key data of the eighth aspect of the invention) allocated to a plurality of sets defined so that there are sets having as elements only nodes at the terminal ends not having any receiving apparatuses not to be invalidated at their branches side even in a case where any other receiving apparatuses at the branches of any nodes of the nodes at the terminal ends in the horizontal layer B1 shown in FIG. 22 are invalidated for each of the receiving apparatuses 104_1 to 104_N.

Further, the key management device 103 sets up a plurality of key data K_ORG (the fifth key data of the eighth aspect of the invention) allocated to all nodes located on the paths between the nodes on the terminal ends corresponding to the receiving apparatuses in the horizontal layer B2 shown in FIG. 22 and the root for each of the receiving apparatuses 104_1 to 104_N.

[Example of operation of revocation processing]

The key management device 103 performs the revocation processing by the method explained by using FIG. 16 in the first embodiment.

In this case, at step ST23 of FIG. 16, as shown below, the revocation processing is carried out based on the key acquisition method SKT_B to generate the key destination data Im.

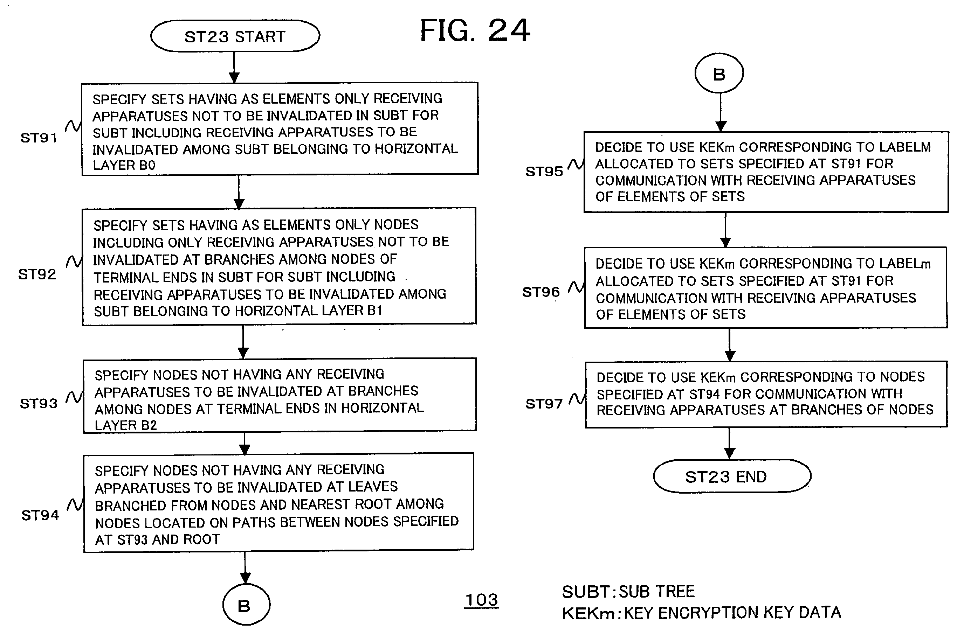

FIG. 24 is a flow chart for explaining the processing of step ST23 of FIG. 16 performed by the key management device 103.

In FIG. 24, step ST91 corresponds to the first step of the fifth aspect of the invention, step ST92 corresponds to the second step of the fifth aspect of the invention, steps ST93 and ST94 correspond to the third step of the fifth aspect of the invention, and steps ST95, ST96, and ST97 correspond to the fourth step of the fifth aspect of the invention.

Further, the first means and the second means of the seventh aspect of the invention are realized by executing steps ST91 and ST92 by the processing unit 113.

Further, the third means of the seventh aspect of the invention is realized by executing steps ST93 and ST94 by the processing unit 113.

Further, the fourth means of the seventh aspect of the invention is realized by executing steps ST95, ST96, and ST97 by the processing unit 113.

Step ST91:

The key management device 103 specifies the sets having as elements only receiving apparatuses not to be invalidated in the sub trees from among the plurality of sets, defined in advance, having as elements receiving apparatuses belonging to the sub trees, for all sub trees including receiving apparatuses to be revoked among the sub trees (SUBT) belonging to the horizontal layer B0 shown in FIG. 22.

Step ST92:

The key management device 103 specifies the sets having as elements only nodes including only receiving apparatuses not to be invalidated at the branches among nodes at the terminal ends in the sub trees for sub trees (SUBT) belonging to the horizontal layer B1 shown in FIG. 22.

Step ST93:

The key management device 103 specifies the nodes not having any receiving apparatuses to be invalidated at the branches of the nodes among the nodes at the terminal ends in the horizontal layer B2 shown in FIG. 22.

Step ST94:

The key management device 103 specifies the nodes not having any receiving apparatuses to be invalidated at the leaves branched from the nodes and nearest the root from among the nodes located on the paths between the nodes and the root for all nodes specified at step ST93.

Step ST95:

The key management device 103 decides to use the key encryption key data KEKm linked with the sets (or the label data LABEL thereof) specified at step ST91 for communication with the receiving apparatuses of elements of the sets.

The key management device 103 holds for example the sets of all subsets in the horizontal layer B0 shown in FIG. 22 and the key encryption key data KEKm linked together and specifies the key encryption key data KEK corresponding to the sets specified at step ST91.

Further, it is also possible if the key management device 103 holds for example the label data LABEL (i,j) corresponding to ones in which the node i and the node j exist in the same LAYER or the node i is at the special level among the subsets S(i,j) as the above sets in the horizontal layer BO shown in FIG. 22, generates the label data LABEL by the method explained by using FIG. 10A, 10B and FIG. 11 based on this, and generates the key encryption key data KEKm as the subset key thereof based on this label data LABEL.

Then, the key management device 103 generates the key destination data Im designating the label data LABEL used for generating the specified (generated) key encryption key data KEKm by the receiving apparatuses 104_1 to 104_N of the elements of the specified sets.

Step ST96:

The key management device 103 decides to use the key encryption key data KEKm linked with the sets (or the label data LABEL thereof) specified at step ST92 for communication with the receiving apparatuses of elements of the sets.

The method of determination (generation) of the key encryption key data KEK is the same as that at step ST95.

Then, the key management device 103 generates the key destination data Im for designating the label data LABEL used for generating the specified (generated) key encryption key data KEKm by the receiving apparatuses 104_1 to 104_N of elements of the specified sets.

Step ST97:

The key management device 103 decides to use the key data K_ORG (node key) corresponding to the nodes specified at step ST94 for communication with the receiving apparatuses 104_1 to 104_N at the branches of the nodes of the key encryption key data KEKm.

Then, the key management device 103 generates the key destination data Im for designating the key data K_ORG as the determined key encryption key data KEKm.

[Receiving apparatuses 104_1 to 104_N]

The receiving apparatuses 104_1 to 104_N are PDAs, mobile phones, or other ubiquitous terminal equipment.

As shown in FIG. 19, the receiving apparatuses 104_1 to 104_N have for example communication units 141, memories 142, and processing units 143.

The receiving apparatuses 104_1 to 104_N have the same configurations except the key data K_ORG and the label data LABEL stored in the memories 142.

Here, the memories 142 correspond to the storing means of the eighth aspect of the invention, and the processing units 143 correspond to the processing means of the eighth aspect of the invention.

The communication units 141 are the same as the communication units 41 of the first aspect of the embodiment.

The memory 142 stores a program PRG102 executed by the processing units 143 and various data used for the execution of the program PRG102.

The program PRG102 includes the processing routines of the key acquisition method SKT_A mentioned above.

The memories 142 store the key data K_ORG and the label data LABEL allocated to the receiving apparatuses 104_1 to 104_N by the pre-processing by the key management device 103.

Specifically, the memories 142 store the label data LABEL (the second key data of the eighth aspect of the invention) for acquiring a plurality of label data LABEL (the first key data of the fifth to eighth aspects of the invention) allocated to a plurality of sets defined so that there are sets having as elements only receiving apparatuses not to be invalidated in the sub trees even in a case when any other receiving apparatuses in the sub trees to which the receiving apparatuses in the horizontal layer B0 belong are invalidated.

Further, the memories 142 store the label data LABEL (the fourth key data of the eighth aspect of the invention) for acquiring a plurality of label data LABEL (the second key data of the fifth to seventh aspects of the invention and the third key data of the eighth aspect of the invention) allocated to a plurality of sets defined so that there are sets having as elements only the nodes at the terminal ends including only receiving apparatuses not to be invalidated in the sub trees at the branches even in a case where any sub trees in the horizontal layer B1 include any receiving apparatuses to be invalidated at the branches thereof.

Further, the memories 142 store a plurality of key data K_ORG (the third key data of the first to third aspects of the invention and the fifth key data of the eighth aspect of the invention) allocated to all nodes located on the paths between the nodes at the terminal ends corresponding to the receiving apparatuses in the horizontal layer B2 and the root.

The processing units 143 execute the program PRG102 stored in the memories 142 and centrally control the processings of the receiving apparatuses 104_1 to 104_N in accordance with the execution thereof. In the present embodiment, the processings of the receiving apparatuses 104_1 to 104_N are defined by the program PRG102 executed by the processing units 143.

Below, the processings of the receiving apparatuses 104_1 to 104_N are the same as the processings explained above by using FIG. 20 and FIG. 21 in the first embodiment.

Here, in the key acquisition method SKT_B, assume that the revocation of R number of receiving apparatuses 104_1 to 104_N exerts an influence upon R0B number of sections of the horizontal layer B1 configuring the tree and further exerts an influence upon R1B number of sections of the horizontal layer B2.

In this case, the order of the amount of communication between the key management device 103 accompanied with the revocation and the receiving apparatuses 104_1 to 104_N not to be revoked becomes O(COB) shown in the following formula (4) in the case of the key acquisition method SKT_B.

$$\text{(Formula 4)}$$

$$\mathtt{O(COB)=(R+R0B+R1B((log2N)-HB[1]-HB[0])-R1Blog2R1B)}$$

$$\mathtt{(4)}$$

Further, the order of the amount of the key data K_ORG and the label data LABEL stored by the memories 142 becomes O(STB) shown in the following formula (5).

$$\text{(Formula 5)}$$

$$\mathtt{O(STB)=((HB[0])1.5+(HB[1])1.5-HB[0]-HB[1]+log2N)}$$

$$\mathtt{(5)}$$

Due to this, the same effects as those by the communication system 1 of the first embodiment are obtained even by the communication system 101.

The present invention is not limited to the above embodiments.

In the above embodiments, the case where communication between the key management devices 3 and 103 and the receiving apparatuses 4_1 to 4_N and 104_1 to 104_N was carried out by the wireless method was exemplified, but the communication can be carried out by a wired method too.

Further, in the above embodiments, as the plurality of key acquisition methods of the present invention, two key acquisition methods SKT_A and SKT-B were exemplified, but the invention is not particularly limited to the type of the key acquisition method. Further, the number of the key acquisition methods is not particularly limited so far as it is plural.

For example, so far as the present invention employs the LSD or SD method for the first horizontal layer including the leaves to which a plurality of receiving apparatuses are allocated and employs the CST method for the second horizontal layer including the root to which the key management device is allocated, the horizontal layer may not exist or a single number or a plurality of layers may exist between the first horizontal layer and the second horizontal layer, and any key acquisition method may be applied to these horizontal layers.

According to the present invention, a data processing method defining the amount of communication between the key management side and the receiving apparatuses accompanied with the revocation processing and the amount of the key data held by the receiving apparatuses by a suitable trade off, a program of the same, an apparatus of the same, and a receiving apparatus can be provided.

INDUSTRIAL APPLICABILITY

The present invention can be applied to a data processing system for secure communication.

LIST OF REFERENCES

| 1, 101... | communication system |
|---|---|
| 3, 103... | key management device |
| 4_1 to 4_N, 104_1 to 104_N... | receiving apparatus |
| 10, 110... | bus |
| 11, 111... | communication unit |
| 12, 112... | memory |
| 13, 113... | processing unit |
| 40, 140... | bus |
| 41, 141... | communication unit |
| 42, 142... | memory |
| 43, 143... | processing unit |

## Claims

1. A data processing method performed by a key management side based on a tree defining a first layer to which a plurality of leaves linked with a plurality of receiving apparatuses belong and a second layer to which a root linked with the key management side belongs, comprising:

   a first step of specifying sets having as elements only receiving apparatuses not to be invalidated in the sub trees from among a plurality of sets defined in advance for sub trees including receiving apparatuses to be invalidated among sub trees belonging to the first layer;
   a second step of specifying nodes not having any receiving apparatuses to be invalidated at branches of the nodes among nodes at terminal ends in the second layer;
   a third step of specifying the nodes not having any receiving apparatuses to be invalidated at the leaves branched from the node and nearest the root from among nodes located on the paths between the nodes specified at the second step and the root; and
   a fourth step of communicating with receiving apparatuses not to be invalidated based on the second key data allocated to the nodes specified at the third step.

2. A data processing method as set forth in claim 1, wherein
   in the fourth step the key management side communicates on the basis of the first key data with the receiving apparatuses which are elements of the sets specified by the first step and communicates on the basis of the second key data with the receiving apparatuses not to be invalidated linked with the leaves branched from the nodes specified by the third step.

3. A data processing method as set forth in claim 1, further comprising:

   a step of transmitting a key specification data specifying the first key data to the receiving apparatuses which is the elements of the sets specified by the first step; and
   a step of transmitting a key specification data specifying the second key data to the receiving apparatuses not to be invalidated linked with the leaves branched from the nodes specified by the third step.

4. A data processing method as set forth in claim 1, further comprising:

   a fifth step of setting to the plurality of receiving apparatuses before the first step,
   a third key data for generating a plurality of the first key data respectively allocated to a plurality of sets defined so that a set having only the receiving apparatuses not to be invalided in the sub trees exists as elements even when any other receiving apparatuses in the sub trees to which the receiving apparatuses in the first layer belong are to be invalidated and
   a plurality of the second key data respectively allocated to all of the nodes positioned on the path between the node of the terminal end linked with the receiving apparatuses of the second layer and the root.

5. A program for making a computer on the key management side execute key management processing based on a tree defining a first layer to which a plurality of leaves linked with a plurality of receiving apparatuses belong and a second layer to which a root linked with the key management side belongs, comprising:

a first routine of specifying sets having as elements only receiving apparatuses not to be invalidated in the sub trees from among a plurality of sets defined in advance for sub trees including receiving apparatuses to be invalidated among sub trees belonging to the first layer;

a second routine of specifying nodes not having any receiving apparatuses to be invalidated at branches of the nodes among nodes at terminal ends in the second layer;

a third routine of specifying the nodes not having any receiving apparatuses to be invalidated at the leaves branched from the node and nearest the root from among nodes located on the paths between the nodes specified at the second routine and the root; and

a fourth routine of communicating with receiving apparatuses not to be invalidated based on the second key data allocated to the nodes specified at the third routine.

6. A data processing apparatus for key management based on a tree defining a first layer to which a plurality of leaves linked with a plurality of receiving apparatuses belong and a second layer to which a root linked with the key management side belongs, comprising

a first means for specifying sets having as elements only receiving apparatuses not to be invalidated in the sub trees from among a plurality of sets defined in advance for sub trees including receiving apparatuses to be invalidated among sub trees belonging to the first layer;

a second means for specifying nodes not having any receiving apparatuses to be invalidated at branches of the nodes among nodes at terminal ends in the second layer;

a third means for specifying the nodes not having any receiving apparatuses to be invalidated at the leaves branched from the node and nearest the root from among nodes located on the paths between the nodes specified by the second means and the root; and

a fourth means for communicating with receiving apparatuses not to be invalidated based on the second key data allocated to the nodes specified by the third means.

7. A receiving apparatus for communicating with a key management side based on a tree defining a first layer to which a plurality of leaves linked with a plurality of receiving apparatuses belong and a second layer to which a root linked with the key management side belongs, comprising

a storing means for storing third key data for generating a plurality of first key data allocated to a plurality of sets defined so that there are sets having as elements only receiving apparatuses not to be invalidated in the sub trees even in a case where any other receiving apparatuses in sub trees to which the receiving apparatuses in the first layer belong are invalidated and plurality of second key data allocated to all of the nodes located on the paths between the nodes on the terminal ends corresponding to those receiving apparatuses in the second layer and the root and

a processing means for generating the first key data based on the third key data read out from the storing means when the key designation data received from the key management side designates the third key data, communicating with the key management side by using the first key data, and communicating with the key management side by using the second key data read from the storing means when the key designation data designates the second key data.

8. A data processing method of a fifth aspect of the invention is a data processing method performed by a key management side based on a tree defining a first layer to which a plurality of leaves linked with a plurality of receiving apparatuses belong and a second layer to which a root linked with the key management side belongs, comprising

a first step of specifying sets having as elements only receiving apparatuses not to be invalidated in the sub trees from among a plurality of sets defined in advance for sub trees including receiving apparatuses to be invalidated among sub trees belonging to the first layer;

a second step of specifying sets having as elements only nodes including only receiving apparatuses not to be invalidated at the branches among nodes on the terminal ends in the sub trees from among a plurality of sets defined in advance for the sub trees including receiving apparatuses to be invalidated at the branches among the sub trees belonging to the third layer;

a third step of specifying the nodes not having any receiving apparatuses to be invalidated at the branches from the nodes and nearest the root from among nodes located on the paths between the nodes not having receiving apparatuses to be invalidated at the branches of the nodes and the root among the nodes of the second layer; and

a fourth step of communicating with the receiving apparatuses not to be invalidated based on the first key data allocated to the sets specified at the first step, the second key data allocated to the sets specified at the second step, and the third key data allocated to the nodes specified at the third step.

9. A program for making a computer on the key management side execute key management processing based on a tree defining a first layer to which a plurality of leaves linked with a plurality of receiving apparatuses belong, a second layer to which a root linked with the key management side belongs, and a third layer interposed between the first layer and the second layer, comprising

a first routine of specifying sets having as elements only receiving apparatuses not to be invalidated in the sub trees from among a plurality of sets defined in advance for sub trees including receiving apparatuses to be invalidated among sub trees belonging to the first layer;

a second routine of specifying sets having as elements only nodes including only receiving apparatuses not to be invalidated at the branches among nodes on the terminal ends in the sub trees from among a plurality of sets defined in advance for the sub trees including receiving apparatuses to be invalidated at the branches among the sub trees belonging to the third layer;

a third routine of specifying the nodes not having any receiving apparatuses to be invalidated at the branches from the nodes and nearest the root from among nodes located on the paths between the nodes not having receiving apparatuses to be invalidated at the branches of the nodes and the root among the nodes of the second layer; and

a fourth routine of communicating with the receiving apparatuses not to be invalidated based on the first key data allocated to the sets specified at the first routine, the second key data allocated to the sets specified at the second routine, and the third key data allocated to the nodes specified at the third routine.

10. A data processing apparatus for key management based on a tree defining a first layer to which a plurality of leaves linked with a plurality of receiving apparatuses belong, a second layer to which a root linked with the key management side belongs, and a third layer interposed between the first layer and the second layer, comprising:

a first means for specifying sets having as elements only receiving apparatuses not to be invalidated in the sub trees from among a plurality of sets defined in advance for sub trees including receiving apparatuses to be invalidated among sub trees belonging to the first layer;

a second means for specifying sets having as elements only nodes including only receiving apparatuses not to be invalidated at the branches among nodes on the terminal ends in the sub trees from among a plurality of sets defined in advance for the sub trees including receiving apparatuses to be invalidated at the branches among the sub trees belonging to the third layer;

a third means for specifying the nodes not having any receiving apparatuses to be invalidated at the branches from the nodes and nearest the root from among nodes located on the paths between the nodes not having receiving apparatuses to be invalidated at the branches of the nodes and the root among the nodes of the second layer; and

a fourth routine of communicating with the receiving apparatuses not to be invalidated based on the first key data allocated to the sets specified by the first means, the second key data allocated to the sets specified by the second means, and the third key data allocated to the nodes specified by the third means.

11. A receiving apparatus for communicating with a key management side based on a tree defining a first layer to which a plurality of leaves linked with a plurality of receiving apparatuses belong, a second layer to which a root linked with the key management side belongs, and a third layer interposed between the first layer and the second layer, comprising

a storing means for storing second key data for generating a plurality of first key data allocated to a plurality of sets defined so that there are sets comprised of only receiving apparatuses not to be invalidated in the sub trees even in a case where any other receiving apparatuses in sub trees to which receiving apparatuses in the first layer belong are invalidated, fourth key data for generating a plurality of third key data allocated to a plurality of sets defined so that there are sets having as elements only nodes at the terminal ends not having receiving apparatuses to be invalidated at the branches thereof even in a case where other receiving apparatuses at the branches of any nodes among nodes at the terminal ends of the third layer are invalidated, and a plurality of fifth key data allocated to all of the nodes located on the paths between the nodes at the terminal ends corresponding to the receiving apparatuses at the second layer and the root and

a processing means for generating the first key data based on the second key data read from the storing means when the key designation data received from the key management side designates the second key data, generating the third key data based on the fourth key data read from the storing means when the key designation data designates the fourth key data, communicating with the key management side by using the third key data, and communicating with the key management side by using the fifth key data read from the storing means when the key designation data designates the fifth key data.

# FIG. 1

4_1(104_1)

RECEIVING
APPARATUS

4_2(104_2)

RECEIVING
APPARATUS

3(103)

KEY
MANAGEMENT
DEVICE

⋮

4_N(104_N)

RECEIVING
APPARATUS

1(101)

# FIG. 2

13(113)

```
┌──────────────┐
│  PROCESSING  │
│    UNIT      │
└──────────────┘
```

10(110)

```
┌────────────────────────┐        ┌──────────────────┐
│                        │        │  COMMUNICATION   │
│  ┌──────────────┐      │        │      UNIT        │
│  │  PRG1        │      │        └──────────────────┘
│  │  (101)       │      │              11(111)
│  └──────────────┘      │
│                        │
│  ┌──────────────┐      │
│  │ K_ORG        │      │                3(103)
│  └──────────────┘      │
│                        │
│  ┌──────────────┐      │
│  │ LABEL        │      │
│  └──────────────┘      │
└────────────────────────┘
```

12(112)
MEMORY

# FIG. 3

ROOT (MANAGEMENT DEVICE 3)

NODE

31

31

31 SECTION

LEAF
(RECEIVING APPARATUS 4_1)

LEAF
(RECEIVING APPARATUS 4_N)

20

EP 1 617 585 A1

# FIG. 4

```
                    START
                      │
                      ▼
ST1  ┌──────────────────────────────────────┐
     │ SPECIFY RECEIVING APPARATUSES TO      │
     │ BE REVOKED AMONG RECEIVING            │
     │ APPARATUSES BELONGING TO              │
     │ SECTION FOR ALL SECTIONS              │
     │ BELONGING TO HORIZONTAL LAYER 0       │
     └──────────────────────────────────────┘
                      │
                      ▼
ST2  ┌──────────────────────────────────────┐
     │ PERFORM RV PROCESSING BY              │
     │ REVOCATION RV METHOD EMPLOYED         │
     │ IN EACH SECTION BASED ON              │
     │ REVOKED RECEIVING APPARATUSES         │
     │ FOR ALL SECTIONS BELONGING TO         │
     │ HORIZONTAL LAYER 0                    │
     └──────────────────────────────────────┘
                      │              ◄────── (A)
                      ▼
ST3  ┌──────────────────────────────────────┐
     │              I=I+1                    │
     └──────────────────────────────────────┘
                      │
                      ▼
ST4  ┌──────────────────────────────────────┐
     │ SPECIFY LEAVES INFLUENCED BY          │
     │ LAYER L−1 BY REVOCATION OF            │
     │ RECEIVING APPARATUSES AMONG           │
     │ NODES BELONGING TO SECTION            │
     │ FOR ALL SECTIONS BELONGING TO         │
     │ HORIZONTAL LAYER L                    │
     └──────────────────────────────────────┘
```

```
ST5  ┌──────────────────────────────────────┐
     │ PERFORM RV PROCESSING BY RV           │
     │ METHOD EMPLOYED IN EACH               │
     │ SECTION BASED ON LEAVES               │
     │ INFLUENCED BY REVOCATION FOR          │
     │ ALL SECTIONS BELONGING TO             │
     │ HORIZONTAL LAYER L                    │
     └──────────────────────────────────────┘
                      │
                      ▼
ST6       ◄───────  I=L?  ──────►  Y ──► (A)
                      │
                      │ N
                      ▼
ST7  ┌──────────────────────────────────────┐
     │ GENERATE KEKm USED FOR                │
     │ COMMUNICATION WITH NOT                │
     │ REVOKED RECEIVING APPARATUSES         │
     │ BASED ON RESULTS OF RV                │
     │ PROCESSING FOR ALL SECTIONS           │
     │ OF ALL HORIZONTAL LAYERS              │
     └──────────────────────────────────────┘
                      │
                      ▼
                    END
```

KEKm : KEY ENCRYPTION KEY DATA

EP 1 617 585 A1

# FIG. 5

ROOT( MANAGEMENT DEVICE 3 )

31[1] (CST)

HORIZONTAL
LAYER A1
$(\log_2 N - HA[0])$

31[0] SECTION (LSD)

HORIZONTAL
LAYER A0
(HA[0])

LEAF
(RECEIVING APPARATUS 4_1)

LEAF
(RECEIVING APPARATUS 4_N )

SKT−A

EP 1 617 585 A1

# FIG. 6

**CST**

EP 1 617 585 A1

FIG. 7

CST

# FIG. 8

X — RECEIVING APPARATUSES TO BE REVOKED

= — UNUSABLE NODE KEY

◆ — NODE KEY USED FOR ENCRYPTION

**CST**

EP 1 617 585 A1

FIG. 9

SD

FIG. 10A

FIG. 10B

SD

EP 1 617 585 A1

# FIG. 11

$$LABEL_{i,j} = G_L(G_R(LABEL_i))$$
$$SK_{i,j} = G_M(LABEL_{i,j})$$

C bit | **S** | LABEL OF CERTAIN NODE

↓

| **G** | PRNG (PSEUDO RANDOM NUMBER GENERATOR)

↓

3C bit | $G_L(S)$ | $G_M(S)$ | $G_R(S)$ |

LABEL OF     KEY OF     LABEL OF
SUB ON LEFT  ITS NODE  SUB ON RIGHT

# FIG. 12

LABEL OWNED BY u4
- J = 3, 5, 8, 18 WITH RESPECT TO i = 1
- J = 5, 8, 18 WITH RESPECT TO i = 2
- J = 8, 18 WITH RESPECT TO i = 4
- J = 18 WITH RESPECT TO i = 9
- ONE LABEL FOR CASE OF NO REVOKE

**SD**

# FIG. 13

SPECIAL LEVEL

Layer

u1  u2  u3  u4  u5  u6  u7  u8  u9  u10 u11 u12 u13 u14 u15 u16

**LSD**

EP 1 617 585 A1

# FIG. 14

LSD

# FIG. 15

```
        ┌─────────────┐
        │    START    │
        └──────┬──────┘
               │
               ▼
        ┌──────────────────────────────┐
        │  SET UP KEY DATA K_ORG AND    │
ST11    │  LABEL "LABEL" CORRESPONDING  │
        │  TO SKT-A IN RECEIVING        │
        │  APPARATUSES                  │
        └──────────────┬───────────────┘
                       │
                       ▼
               ┌─────────────┐
               │     END     │
               └─────────────┘
```

3

# FIG. 16

```
        START
          │
          ▼
ST21  ┌──────────────────────────────┐
      │ GENERATE LIST RL OF RECEIVING │
      │ APPARATUSES TO BE REVOKED     │
      └──────────────────────────────┘
          │
          ▼
ST22  ┌──────────────────────────────────┐
      │ SPECIFY KEKm USED FOR COMMUNICATION│
      │ WITH RECEIVING APPARATUSES BASED   │
      │ ON RL AND SKT-A                    │
      └──────────────────────────────────┘
          │
          ▼
ST23  ┌──────────────────────────────────┐
      │ GENERATE Im DESIGNATING K-ORG     │
      │ AND LABEL USED FOR GENERATING KEKm │
      └──────────────────────────────────┘
          │
          ▼
ST24  ┌──────────────────────────────────┐
      │ GENERATE $E_{KEKm}$ (NEW_SEK) BY   │
      │ ENCRYPTING NEW_SEK BY KEKm         │
      └──────────────────────────────────┘
          │
          ▼
         (A)
```

```
         (A)
          │
          ▼
ST25  ┌──────────────────────────────────┐
      │ GENERATE $E_{NEW\_SEK}$ (PAYL) BY  │
      │ ENCRYPTING PAYL BY NEW_SEK         │
      └──────────────────────────────────┘
          │
          ▼
ST26  ┌──────────────────────────────────┐
      │ GENERATE Im,                       │
      │ $E_{KEKm}$ (NEW_SEK),              │
      │ $E_{NEW\_SEK}$ (DATA CAP STORING PAYL)│
      └──────────────────────────────────┘
          │
          ▼
ST27  ┌──────────────────────────────────┐
      │         BROADCAST CAP             │
      └──────────────────────────────────┘
          │
          ▼
         END
```

KEKm : KEY ENCRYPTION KEY DATA
NEW__SEK : NEW SESSION KEY DATA
PAYL : PAYLOAD DATA
CAP : CAPSULE DATA

EP 1 617 585 A1

# FIG. 17

| $I_1$ | $I_2$ | $\blacksquare \ \blacksquare \ \blacksquare$ | $I_M$ |

| $E_{KEK1}(NEW\_SEK)$ | $E_{KEK2}(NEW\_SEK)$ | $\blacksquare \ \blacksquare \ \blacksquare$ | $E_{KEKM}(NEW\_SEK)$ |

$E_{NEW\_SEK}(PAYL)$

CAP

$I_1 \sim I_M$ : KEY DESIGNATION DATA

# FIG. 18

ST23 START

↓

ST31 — SPECIFY SETS HAVING AS ELEMENTS ONLY RECEIVING APPARATUSES NOT TO BE INVALIDATED OF SUBT FOR SUBT INCLUDING RECEIVING APPARATUSES TO BE INVALIDATED AMONG SUBTR BELONGING TO HORIZONTAL LAYER 0

↓

ST32 — SPECIFY NODES AT WHICH THERE ARE NO RECEIVING APPARATUSES TO BE INVALIDATED AT BRANCHES AMONG NODES AT TERMINAL ENDS IN HORIZONTAL LAYER A1

↓

ST33 — SPECIFY NODES NOT HAVING RECEIVING APPARATUSES TO BE INVALIDATED AT LEAVES BRANCHED FROM NODES AND NEAREST ROOT AMONG NODES LOCATED ON PATHS BETWEEN NODES SPECIFIED AT ST32 AND ROOT

↓

A

A

↓

ST34 — DECIDE TO USE KEKm CORRESPONDING TO LABELm ALLOCATED TO SETS SPECIFIED AT ST31 FOR COMMUNICATION WITH RECEIVING APPARATUSES OF ELEMENTS OF SETS

↓

ST35 — DECIDE TO USE Km CORRESPONDING TO NODES SPECIFIED AT ST33 FOR COMMUNICATION WITH RECEIVING APPARATUSES AT BRANCHES OF NODES

↓

ST23 END

SUBT : SUB TREE
KEKm : KEY ENCRYPTION KEY DATA

3

# FIG. 19

43(143)

```
PROCESSING
UNIT
```

40(140)

```
PRG2
(102)


K_ORG


LABEL
```

```
COMMUNICATION
UNIT
```

41(141)

42(142)
MEMORY

4_1~4_N
(104_1~104_N)

# FIG. 20

START

ST41 — RECEIVE CAP

ST42 — CORRESPONDING Im IN CAP? — N → D

Y

ST43 — SPECIFY KEY DATA OR LABEL DATA DESIGNATED BY CORRESPONDING Im

ST44 — GENERATE KEKm BASED ON KEY DATA OR LABEL DATA SPECIFIED AT ST43

C

C

ST45 — ACQUIRE NEW_SEK BY DECODING $E_{KEKM}$ (NEW_SEK) IN CAP BY KEKM

ST46 — ACQUIRE PAYL BY NEW_SEL BY GENERATING $E_{NEW\_SEK}$ (PAYL) IN CAP

D

END

43

EP 1 617 585 A1

# FIG. 21

ST44 START

ST51 — DOES Im DESIGNATE LABELM? —N→ (A)

↓Y

ST52 — IS LABEL REQUIRED FOR GENERATING LABELm HELD? —Y→

↓N

ST53 — SPECIFY LABELS OF TWO SETS SERVING AS SUM SET FOR SETS OF LABELm

↓

ST54 — GENERATE KEKm BASED ON TWO SK GENERATED FROM TWO LABELS SPECIFIED AT ST53

↓

END

ST55 — GENERATE KEKm BASED ON SK GENERATED FROM LABELm DESIGNATED BY Im AT ST51

↓

END

(A)

↓

ST56 — DEFINE KEY DATA K_ORG DESIGNATED BY IM AT ST51 AS KEKm

↓

ST44 END

43

EP 1 617 585 A1

# FIG. 22

ROOT(MANAGEMENT DEVICE 103)

31[2]
(CST)

HORIZONTAL LAYER B2
$(\log_2 N - HB[0] - HB[1])$

31[1]SECTION (LSD)

HORIZONTAL LAYER B1
(HB[1])

31[0]SECTION (LSD)

HORIZONTAL LAYER B0
(HB[0])

LEAF
(RECEIVING APPARATUS 104_1)

LEAF
(RECEIVING APPARATUS 104_N)

SKT−B

EP 1 617 585 A1

# FIG. 23

START

ST81   SET UP KEY DATA K_ORG AND LABEL DATA LABEL CORRESPONDING TO SKT_B IN RECEIVING APPARATUS

END

103

# FIG. 24

**ST23 START**

ST91 — SPECIFY SETS HAVING AS ELEMENTS ONLY RECEIVING APPARATUSES NOT TO BE INVALIDATED IN SUBT FOR SUBT INCLUDING RECEIVING APPARATUSES TO BE INVALIDATED AMONG SUBT BELONGING TO HORIZONTAL LAYER B0

ST92 — SPECIFY SETS HAVING AS ELEMENTS ONLY NODES INCLUDING ONLY RECEIVING APPARATUSES NOT TO BE INVALIDATED AT BRANCHES AMONG NODES OF TERMINAL ENDS IN SUBT FOR SUBT INCLUDING RECEIVING APPARATUSES TO BE INVALIDATED AMONG SUBT BELONGING TO HORIZONTAL LAYER B1

ST93 — SPECIFY NODES NOT HAVING ANY RECEIVING APPARATUSES TO BE INVALIDATED AT BRANCHES AMONG NODES AT TERMINAL ENDS IN HORIZONTAL LAYER B2

ST94 — SPECIFY NODES NOT HAVING ANY RECEIVING APPARATUSES TO BE INVALIDATED AT LEAVES BRANCHED FROM NODES AND NEAREST ROOT AMONG NODES LOCATED ON PATHS BETWEEN NODES SPECIFIED AT ST93 AND ROOT

**B**

ST95 — DECIDE TO USE KEKm CORRESPONDING TO LABELM ALLOCATED TO SETS SPECIFIED AT ST91 FOR COMMUNICATION WITH RECEIVING APPARATUSES OF ELEMENTS OF SETS

ST96 — DECIDE TO USE KEKm CORRESPONDING TO LABELm ALLOCATED TO SETS SPECIFIED AT ST91 FOR COMMUNICATION WITH RECEIVING APPARATUSES OF ELEMENTS OF SETS

ST97 — DECIDE TO USE KEKm CORRESPONDING TO NODES SPECIFIED AT ST94 FOR COMMUNICATION WITH RECEIVING APPARATUSES AT BRANCHES OF NODES

**ST23 END**

103

SUBT: SUB TREE
KEKm: KEY ENCRYPTION KEY DATA

EP 1 617 585 A1

<div style="text-align:center">**INTERNATIONAL SEARCH REPORT**</div>

| | International application No. |
|---|---|
| | PCT/JP2004/005458 |

| A. | CLASSIFICATION OF SUBJECT MATTER |
|---|---|

Int.Cl⁷ H04L9/08, H04L12/44

According to International Patent Classification (IPC) or to both national classification and IPC

| B. | FIELDS SEARCHED |
|---|---|

Minimum documentation searched (classification system followed by classification symbols)

Int.Cl⁷ H04L9/08, H04L12/44

Documentation searched other than minimum documentation to the extent that such documents are included in the fields searched

| Jitsuyo Shinan Koho | 1922-1996 | Jitsuyo Shinan Toroku Koho | 1996-2004 |
|---|---|---|---|
| Kokai Jitsuyo Shinan Koho | 1971-2004 | Toroku Jitsuyo Shinan Koho | 1994-2004 |

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | Seiji OKUAKI, Santoso Bagusu, Kazuo OTA, "Complete Subtree Method to Subset Difference Method o Yugo shita Hybrid System no Teian", 2003 Nen Ango to Joho Security Symposium Yokoshu, 26 January, 2003 (26.01.03), Vol.1 of 2, pages 221 to 226 | 1-11 |
| Y | Dani Halevy and Adi Shamir, "The LSD Broadcast Encryption Scheme", Lecture Notes in Computer Science, Advances in Cryptology-CRYPTO 2002, received on 09 September, 2002 (09.09.02), Vol.2442, pages 47 to 60 | 1-11 |

| ☐ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 21 July, 2004 (21.07.04) | 10 August, 2004 (10.08.04) |

| Name and mailing address of the ISA/ | Authorized officer |
|---|---|
| Japanese Patent Office | |
| Facsimile No. | Telephone No. |

Form PCT/ISA/210 (second sheet) (January 2004)